# EUROPÄISCHE PATENTSCHRIFT

(11) **EP 3 298 526 B1**
(45) Veröffentlichungstag und Bekanntmachung des Hinweises auf die Patenterteilung: **08.07.2020**
(21) Anmeldenummer: 16722206.6
(22) Anmeldetag: 12.05.2016
(51) Int. Cl.: G06F 21/31, G06F 21/33, G06F 21/64, H04L 29/06

(54) **VERFAHREN ZUM LESEN VON ATTRIBUTEN AUS EINEM ID-TOKEN**
METHOD FOR READING ATTRIBUTES FROM AN ID TOKEN
PROCÉDÉ DE LECTURE D'ATTRIBUTS À PARTIR D'UN JETON D'IDENTIFICATION

(30) Priorität: 18.05.2015 DE 102015209073
(43) Veröffentlichungstag der Anmeldung: 28.03.2018
(73) Patentinhaber: Bundesdruckerei GmbH, 10969 Berlin (DE)
(72) Erfinder: SCHOLZE, Steffen, 13469 Berlin (DE); SCHWAN, Matthias, 10437 Berlin (DE); MÜLLER, Frank, 10407 Berlin (DE); WIRTH, Klaus-Dieter, 12683 Berlin (DE); FILZHUTH, Elke, 12359 Berlin (DE)
(74) Vertreter: Richardt Patentanwälte PartG mbB
(86) Internationale Anmeldenummer: PCT/EP2016/060626
(87) Internationale Veröffentlichungsnummer: WO 2016/184767

(56) Entgegenhaltungen:
- "Advanced Security Mechanisms for Machine Readable Travel Documents and eIDAS Token - Part 2", , 16. Dezember 2014 (2014-12-16), XP55257174, Gefunden im Internet: URL:https://wwww.bsi.bund.de/SharedDocs/Do wnloads/DE/BSI/Publikationen/TechnischeRic htlinien/TR03130/ [gefunden am 2016-03-10]
- "Technical Guideline eID-Server", , 15. Januar 2014 (2014-01-15), XP055256439, Gefunden im Internet: URL:https://www.bsi.bund.de/SharedDocs/Dow nloads/DE/BSI/Publikationen/TechnischeRich tlinien/TR03130/TR-03130_TR-eID-Server_Par t1.pdf?__blob=publicationFile [gefunden am 2016-07-19]
- Bsi ET AL: "Advanced Security Mechanisms for Machine Readable Travel Documents and eIDAS Token", Part 3 - Common Specifications Version 2.20, 3. Februar 2015 (2015-02-03), XP055258090, Gefunden im Internet: URL:https://www.bsi.bund.de/SharedDocs/Dow nloads/EN/BSI/Publications/TechGuidelines/ TR03110/BSI_TR-03110_Part-3-V2_2.pdf?__blo b=publicationFile&v=1 [gefunden am 2016-03-14]
- Bsi: "Technical report Signature creation and administration for eIDAS token", , 17. März 2014 (2014-03-17), XP055289594, Gefunden im Internet: URL:http://www.alain-bensoussan.com/wp-con tent/uploads/2014/04/24206679.pdf [gefunden am 2016-07-19]

## Beschreibung

Die Erfindung betrifft ein Verfahren zum Lesen von Attributen aus einem ID-Token, einen ID-Token und ein Computersystem.

Aus dem Stand der Technik sind verschiedene Verfahren zur Verwaltung der so genannten digitalen Identität eines Benutzers bekannt:
Microsoft Windows CardSpace ist ein Client-basiertes digitales Identitätssystem, welches es Internetbenutzern ermöglichen soll, deren digitale Identität gegenüber Online-Diensten mitzuteilen. Nachteilig ist hierbei unter anderem, dass der Nutzer seine digitale Identität manipulieren kann.

Bei OPENID handelt es sich dagegen um ein Server-basiertes System. Ein so genannter Identity-Server speichert eine Datenbank mit den digitalen Identitäten der registrierten Nutzer. Nachteilig ist hieran unter anderem ein mangelhafter Datenschutz, da die digitalen Identitäten der Nutzer zentral gespeichert werden und das Nutzerverhalten aufgezeichnet werden kann.

Aus US 2007/0294431 A1 ist ein weiteres Verfahren zur Verwaltung der digitalen Identitäten bekannt, welches ebenfalls eine Nutzerregistrierung erfordert.

Aus DE 10 2008 000 067 A1 ist ein Verfahren zum Lesen von zumindest einem Attribut aus einem ID-Token bekannt, von dem die vorliegende Erfindung als dem nächstkommenden Stand der Technik ausgeht. Weiterbildungen dieses Verfahrens sind in den Patentanmeldungen DE 10 2008 040 416, DE 10 2008 042 262 , DE 10 2009 026 953 , DE 10 2009 027 723, DE 10 2009 027 681 und DE 10 2010 028133 offenbart.

Die technische Richtlinie TR-03110-2 "Advanced Security Mechanisms for Machine Readable Travel Documents and elDAS Token - Part 2" (2014-12-16), XP55257174, beschreibt Sicherheitsmerkmale und entsprechende Verfahren für maschinenlesbare Reisedokumente und elDAS Token.

Die technische Richtlinie BSI TR-03130-1, Version 2.0.1, "Technical Guideline elD-Server", (2014-01-15), XP055256439, beschreibt Funktionen des neuen deutschen Personalausweises einschließlich der eID-Funktion (elektronische Identitätsverifikation) und der eAT-Funktion (elektronischer Aufenthaltstitel) sowie entsprechende Schnittstellen.

Die technische Richtlinie TR-03110-3 "Advanced Security Mechanisms for Machine Readable Travel Documents and elDAS Token", 3. Februar 2015, XP055258090, beinhaltet allgemeine Spezifikationen bezüglich der PKI, die zur Zugriffskontrolle auf die Sicherheitsdokumente verwendet wird, sowie bezüglich der Abbildung der Protokolle ASN.1 und APDU auf diverse andere Protokolle und Verfahren.

Der technische Bericht des BSI "Technical report Signature creation and administration for elDAS token", 17. März 2014, XP055289594, spezifiziert die autonome Erzeugung von Signaturen durch ein elDAS Token.

Der Erfindung liegt demgegenüber die Aufgabe zugrunde, ein verbessertes Verfahren zum Lesen von Attributen aus einem ID-Token zu schaffen sowie einen entsprechenden ID-Token und ein Computersystem.

Die der Erfindung zugrunde liegenden Aufgaben werden jeweils mit den Merkmalen der unabhängigen Patentansprüche gelöst. Ausführungsformen der Erfindung sind in den abhängigen Ansprüchen angegeben.

Unter einem "ID-Token" wird hier insbesondere ein tragbares elektronisches Gerät verstanden, welches zumindest einen geschützten elektronischen Datenspeicher zur Speicherung der Attribute und eine Kommunikations-Schnittstelle zum Auslesen der Attribute aufweist. Der Speicherbereich ist geschützt, um zu verhindern, dass das in dem Speicherbereich gespeicherte Attribut in unerlaubter Weise verändert oder ohne die dafür erforderliche Berechtigung ausgelesen wird. Mit anderen Worten kann auf den Speicherbereich nur dann zugegriffen werden, wenn eine hierzu erforderliche Zugriffberechtigung gegeben ist.

Insbesondere kann es sich bei dem ID-Token um einen USB-Stick handeln oder ein Dokument, insbesondere ein Wert- oder Sicherheitsdokument. Unter einem "Dokument" werden erfindungsgemäß papierbasierte und/oder kunststoffbasierte Dokumente verstanden, wie zum Beispiel elektronische Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Banknoten, Bankkarten und Kreditkarten, Frachtbriefe oder sonstige Berechtigungsnachweise, in die ein Datenspeicher zur Speicherung des zumindest einen Attributs integriert ist.

Bei dem ID-Token kann es sich um einen Hardwaretoken handeln oder um einen Softtoken, wenn dieser kryptografisch an einen Hardwaretoken, das heißt beispielsweise an ein sogenanntes Secure Element, gebunden ist.

Insbesondere kann ein solcher kryptografisch an ein Secure Element gebundener Softtoken gemäß DE 10 2011 082 101, deren Offenbarungsgehalt voll umfänglich zum Offenbarungsgehalt der vorliegenden Patentanmeldung gemacht wird, erzeugt werden.

Unter einem "ID-Provider-Computersystem" wird hier ein Computersystem verstanden, welches dazu ausgebildet ist, Attribute aus dem ID-Token eines Nutzers auszulesen und eine Attributspezifikation in den ID-Token zu schreiben. Vorzugsweise wird das ID-Provider-Computersystem in einem sogenannten Trustcenter betrieben, um ein möglichst hohes Maß an Sicherheit zu schaffen.

Unter einem "Attribut-Provider-Computersystem" wird hier ein Computersystem verstanden, welches dazu ausgebildet ist, eine Attributspezifikation aus dem ID-Token eines Nutzers auszulesen und Attribute in den ID-Token zu schreiben.

Unter einem "Attribut" werden hier insbesondere Daten verstanden, die den Nutzer des ID-Tokens oder den ID-Token selbst betreffen, insbesondere Personalisierungsdaten, wie zum Beispiel persönliche Daten des Nutzers, eine Gültigkeitsdauer oder den Herausgeber des ID-Tokens oder eine Zahlungsinformation, wie zum Beispiel Kreditkartendaten oder andere Daten für ein elektronisches Bezahlsystem.

Unter einer "Attributspezifikation" wird hier eine Beschreibung von denjenigen Attributen verstanden, die zum Beispiel von einem Dienst-Computersystem zur Erbringung eines Dienstes benötigt werden. Die Attribute können über Feldnamen von Datenfeldern identifiziert werden, in denen die jeweiligen Attributwerte gespeichert sind, und/oder über ein semantisches Netz, d.h. eine Konvention, wie Attribute systemübergreifend bezeichnet werden.

Unter einem "Dienst-Computersystem" wird hier ein Computersystem verstanden, welches über eine Netzwerk-Schnittstelle zur Verbindung mit dem Netzwerk verfügt, sodass mithilfe eines Internetbrowsers oder eines anderen Anwendungsprogramms auf von dem Dienst-Computersystem gespeicherte oder generierte Internetseiten zugegriffen werden kann. Insbesondere kann es sich bei dem Dienst-Computersystem um einen Internetserver zur Verfügungstellung einer eCommerce-oder eGovernment-Anwendung handeln, insbesondere einen Onlineshop oder einen Behördenserver.

Unter einem "Nutzer-Computersystem" wird hier ein Computersystem verstanden, auf welches der Nutzer Zugriff hat. Hierbei kann es sich zum Beispiel um einen Personal Computer (PC), ein Tablet PC oder ein Mobilfunkgerät, insbesondere ein Smartphone, mit einem üblichen Internetbrowser, wie zum Beispiel Microsoft Internet Explorer, Safari, Google Chrome, Firefox oder einem anderen Anwendungsprogramm zum Zugriff auf das Dienst-Computersystem handeln. Das Nutzer-Computersystem hat eine Schnittstelle zur Verbindung mit dem Netzwerk, wobei es sich bei dem Netzwerk um ein privates oder öffentliches Netzwerk handeln kann, insbesondere das Internet. Je nach Ausführungsform kann diese Verbindung auch über ein Mobilfunknetz hergestellt werden.

Unter einem "Lesegerät" wird hier ein elektronisches Gerät verstanden, welches einen Lesezugriff und auch einen Schreibzugriff auf den ID-Token ermöglicht, insbesondere ein sogenanntes Chipkartenterminal. Das Lesegerät kann einen integralen Bestandteil des Nutzer-Computersystems bilden oder als separate Komponente ausgeführt sein, beispielsweise als Peripheriegerät des Nutzer-Computersystems. Insbesondere kann es sich bei dem Lesegerät um ein sogenanntes Klasse 1, 2 oder 3 Chipkartenlesegerät handeln.

Unter einem "nichtflüchtigen elektronischen Speicher" wird hier ein Speicher zur Speicherung von Daten, insbesondere von Attributen, verstanden, der auch als Non-Volatile Memory (NVM) bezeichnet wird. Insbesondere kann es sich hierbei um ein EEPROM, beispielsweise ein Flash-EEPROM, kurz als Flash bezeichnet, handeln.

Unter einem "geschützten Speicherbereich" wird hier ein Speicherbereich verstanden, auf den ein Zugriff, das heißt ein Lesezugriff oder ein Schreibzugriff, von einem mit dem Speicher gekoppelten Prozessor nur dann ermöglicht wird, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln.

Unter einem "Prozessor" wird hier eine Logikschaltung verstanden, die zur Ausführung von Programminstruktionen dient. Die Logikschaltung kann auf einem oder mehreren diskreten Bauelementen implementiert sein, insbesondere auf einem Chip.

Unter einem "Zertifikat" wird hier ein digitales Zertifikat verstanden, welches auch als Public-Key-Zertifikat bezeichnet wird. Bei einem Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Alternativ sind auch Zertifikate basierend auf zero-knowledge Kryptosystemen möglich. Beispielsweise kann das Zertifikat dem Standard X.509 oder einem anderen Standard entsprechen. Beispielsweise handelt es sich bei dem Zertifikat um ein Card Verifiable Certificate (CVC).

In dem Zertifikat kann spezifiziert sein, für welches Attribut oder welche Attribute des Nutzers, die in dem geschützten Speicherbereich des ID-Tokens gespeichert sind, das ID-Provider-Computersystem bzw. das Attribut-Provider-Computersystem zur Durchführung des Lesezugriffs berechtigt ist. Ferner können auch die jeweiligen Schreibrechte für Attributspezifikationen oder Attribute in einen Zertifikat definiert sein. Ein solches Zertifikat wird auch als Berechtigungszertifikat bezeichnet.

Unter einer "Session" wird hier eine temporäre Kommunikationsverbindung, das heißt eine sog.Communication Session,insbesondere eine Internet-Session verstanden, die sich gemäß OSl-Schichtmodell auf die Transportschicht ("transport layer") oder die Anwendungsschicht ("application layer") beziehen kann. Insbesondere kann es sich bei einer Session um eine http-Session oder um eine https-Session handeln, wobei bei letzterer der Transportlayer durch eine symmetrische Verschlüsselung geschützt ist.

Unter einem "gesicherten Übertragungskanal" wird hier ein Übertragungskanal verstanden, der kryptografisch abgesichert ist, um ein Ausspähen und/oder eine Manipulation der Übertragung zu verhindern, wobei hierzu ein sogenanntes Secure-Messaging-Verfahren eingesetzt werden kann.

Unter einem "lokalen" gesicherten Übertragungskanal wird hier ein gesicherter Übertragungskanal verstanden, der zwischen dem ID-Token und dem Nutzer-Computersystem über das Lesegerät aufgebaut wird, wobei insbesondere die Verbindung zwischen dem ID-Token und dem Lesegerät kontaktbehaftet oder kontaktlos ausgebildet sein kann, letzteres insbesondere gemäß einem NFC- oder RFID-Standard.

Nach Ausführungsformen der Erfindung wird zum Lesen von Attributen aus einem ID-Token eines Nutzers wie folgt vorgegangen:
1. Der Nutzer sendet eine Dienstanforderung von seinem Nutzer-Computersystem über ein Netzwerk, insbesondere ein öffentliches Netzwerk wie das Internet, an ein Dienst-Computersystem, welches mit einem ID-Provider-Computersystem gekoppelt ist. Hierzu gibt der Nutzer beispielsweise eine URL in einen Internetbrowser seines Nutzer-Computersystems ein, um eine sogenannte Internetsession mit dem Dienst-Computersystem aufzubauen.
   Bei dem Dienst-Computersystem kann es sich zum Beispiel um einen Onlineshop oder ein anderes eCommerce-Portal oder einen Behördenserver, der eine eGovernment-Anwendung zur Verfügung stellt, handeln. Bei der Dienstanforderung des Nutzers kann es sich um die Übertragung einer Kaufentscheidung des Nutzers handeln, die der Nutzer zum Beispiel durch Anklicken eines virtuellen Bedienelements auf der Webseite des Dienst-Computersystems, wie zum Beispiel "Kaufen" oder "buy now" eingibt, wobei diese Dienstanforderung zum Beispiel als http-Request oder https-Request über die Internetsession an das Dienst-Computersystem übertragen werden kann. Bei einer eGovernment-Anwendung kann es sich analog dazu bei der Dienstanforderung um die Übertragung einer Anforderung des Nutzers eines behördlichen Vorgangs, wie zum Beispiel die Ausstellung einer Meldebescheinigung, die Anmeldung eines Kraftfahrzeugs oder die Meldung einer Wohnortänderung oder dergleichen handeln.
2. Das Dienst-Computersystem benötigt für die Erbringung des mit der Dienstanforderung angeforderten Dienstes Attribute des Nutzers und - je nach Anwendungsfall - auch Attribute des ID-Tokens selbst. Beispielsweise kann die erste Attributspezifikation die Attribute Name, Geburtsdatum, Anschrift des Nutzers, Kontonummer des Nutzers, Kreditwürdigkeit des Nutzers sowie Gültigkeitsdauer des ID-Token beinhalten. Die Attribute gemäß dieser ersten Attributspezifikation benötigt das Dienst-Computersystem also zur Erbringung des Dienstes für den Nutzer. Diese erste Attributspezifikation sendet das Dienst-Computersystem an das ID-Provider-Computersystem, wobei dies über das Netzwerk erfolgen kann. Optional kann dies über das Nutzer-Computersystem erfolgen. Alternativ ist das ID-Provider-Computersystem ein integraler Bestandteil des Dienst-Computersystems, sodass das Senden der ersten Attributspezifikation zum Beispiel über einen internen Datenbus oder eine LAN-Verbindung erfolgt.
3. Authentifizierung des Nutzers gegenüber dem ID-Token. Hierzu gibt der Nutzer eine geheime Kennung, wie zum Beispiel die sogenannte Personal Identification Number (PIN) ein. Dies kann je nach Ausführungsform unmittelbar durch Eingabe in den ID-Token erfolgen, durch Eingabe in das Lesegerät oder durch Eingabe in das Nutzer-Computersystem. Vorzugsweise erfolgt die Authentifizierung des Nutzers gegenüber dem ID-Token mittels einer "Fernüberprüfung", worunter hier jedes Verfahren verstanden wird, bei dem die zu überprüfende Kennung nicht in den ID-Token unmittelbar eingegeben wird, um sie mit der dort gespeicherten Kennung zu vergleichen, sondern bei dem die Überprüfung mittels eines das Lesegerät und den ID-Token involvierenden Protokolls erfolgt, bei dem die Kennung, die in das Lesegerät eingegeben wird, nicht an den ID-Token übertragen werden muss. Entsprechende Protokolle sind an sich aus dem Stand der Technik bekannt, wie zum Beispiel Strong Password Only Authentication Key Exchange (SPEKE), Diffie-Hellman Encripted Key Exchange (DH-EKE), Bellovin-Merritt Protokoll oder Password Authenticated Connection Establishment (PACE). Das SPEKE-Protokoll ist beispielsweise bekannt aus www.jablon.org/speke97.html, US 6,792,533 B2 und US 7,139,917 B2. Unter anderem ebenfalls aus www.jablon.org/speke97.html ist das DH-EKE-Protokoll bekannt. Unter anderem aus US 5,241,599 ist das Bellovin-Merritt-Protokoll bekannt. Aus Technical Guideline TR-03110 des Bundesamt für Sicherheit in der Informationstechnik ist das PACE-Protokoll bekannt, weiches sich besonders für elliptische Kurven-Kryptographie eignet, vergleiche hierzu auch DE 102007000587 A1 und DE 102013202001 A1. Vorzugsweise authentifiziert sich neben dem Nutzer auch das Lesegerät gegenüber dem ID-Token, wobei auch ein lokaler gesicherter Übertragungskanal, das heißt ein sogenannter Secure Messaging-Kanal, zwischen dem ID-Token und dem Lesegerät aufgebaut werden kann, beispielsweise indem ein Session Key nach einem Diffie-Hellman-Protokoll zwischen dem ID-Token und dem Lesegerät vereinbart wird.
4. Das ID-Provider-Computersystem authentifiziert sich gegenüber dem ID-Token über das Netzwerk und weist vorzugsweise auch seine Berechtigung für einen Lesezugriff oder Schreibzugriff nach, indem es beispielsweise sein Berechtigungszertifikat über das Netzwerk an den ID-Token überträgt.
   Vorzugsweise authentifiziert sich auch der ID-Token gegenüber dem ID-Provider-Computersystem, das heißt es erfolgt sowohl die sogenannte Terminal Authentication (TA) des ID-Provider-Computersystems gegenüber dem ID-Token und die Chip Authentication (CA) des ID-Tokens, das heißt des in dem ID-Token beinhalteten Chips mit dem Prozessor, gegenüber dem ID-Provider-Computersystem. Die TA und die CA können gemäß BSI TR-03110 durchgeführt werden.
5. Hierbei kann ein erster gesicherter Übertragungskanal nach einem Secure-Messaging-Verfahren aufgebaut werden, indem bei der TA und/oder der CA ein Session Key zwischen dem ID-Token und dem ID-Provider-Computersystem für eine Ende-zu-Ende-Verschlüsselung vereinbart wird, wobei der lokale gesicherte Übertragungskanal bestehen bleibt.
6. Das ID-Provider-Computersystem führt dann einen ersten Lesezugriff aus, um Attribute gemäß der ersten Attributspezifikation aus dem ID-Token auszulesen.
7. Diejenigen Attribute gemäß der ersten Attributspezifikation, die in dem ID-Token gespeichert sind und für die das ID-Provider-Computersystem die erforderliche Leseberechtigung hat, werden aufgrund des ersten Lesezugriffs von dem ID-Token ausgegeben und über den ersten gesicherten Übertragungskanal von dem ID-Token an das ID-Provider-Computersystem über das Netzwerk übertragen. Diese von dem ID-Token ausgegebenen Attribute werden als "erste Teilmenge" der ersten Attributspezifikation bezeichnet. Beispielsweise sind in dem ID-Token lediglich der Name, das Geburtsdatum, die Anschrift des Nutzers sowie die Gültigkeitsdauer des ID-Tokens gespeichert, nicht aber die Kontonummer und die Kreditwürdigkeit des Nutzers. In diesem Fall beinhaltet also die erste Teilmenge den Namen, das Geburtsdatum, die Anschrift des Nutzers und die Gültigkeitsdauer, nicht aber die Kontonummer und die Kreditwürdigkeit des Nutzers, die nicht in dem ID-Token gespeichert sind.
8. Da aufgrund des ersten Lesezugriffs nicht alle erforderlichen Attribute gemäß der ersten Attributspezifikation gelesen werden konnten, wird eine zweite Attributspezifikation erzeugt, die eine zweite Teilmenge der Attribute der ersten Attributspezifikation spezifiziert, nämlich diejenigen Attribute, welche in der ersten Attributspezifikation spezifiziert sind, mit dem ersten Lesezugriff aber nicht ausgelesen werden konnten, das heißt hier die Kontonummer und die Kreditwürdigkeit des Nutzers. Die zweite Attributspezifikation wird zum Beispiel von dem ID-Provider-Computersystem erzeugt und über den ersten gesicherten Übertragungskanal an den ID-Token übertragen.
9. Die zweite Attributspezifikation wird in dem ID-Token gespeichert. Dabei kann bei Speicherung im nicht-flüchtigen Speicher des ID-Tokens eine aus vorherigen Protokollsitzungen gespeicherte Attributspezifikation ersetzt werden. Das ID-Provider-Computersystem erzeugt dann ein erstes Umschaltkommando. Das erste Umschaltkommando wird von dem ID-Provider-Computersystem an den ID-Token über den ersten gesicherten Übertragungskanal zur Umschaltung von dem ersten gesicherten Übertragungskanal auf den lokalen gesicherten Übertragungskanal gesendet.
10. Ein erstes Attribut-Provider-Computersystem authentifiziert sich gegenüber dem ID-Token über das Netzwerk. Dies kann analog zu der Authentifizierung des ID-Provider-Computersystems gegenüber dem ID-Token in dem oben genannten Schritt 4 erfolgen, nämlich mit einer sogenannten TA und einer CA.
11. Hierbei kann ein zweiter gesicherter Übertragungskanal mit Ende-zu-Ende-Verschlüsselung zwischen dem ID-Token und dem Attribut-Provider-Computersystem aufgebaut werden, wobei der erste gesicherte Übertragungskanal bestehen bleibt.
12. Die zweite Attributspezifikation wird dann von dem ID-Token ausgegeben und über den zweiten gesicherten Übertragungskanal an das erste Attribut-Provider-Computersystem übertragen. Auf diese Weise wird an das erste Attribut-Provider-Computersystem kommuniziert, welche Attribute zusätzlich zu den bereits durch das ID-Provider-Computersystem gelesenen Attributen erforderlich sind. Diese Attribute können in einem Speicher des ersten Attribut-Provider-Computersystems vorhanden sein, wie zum Beispiel in einer Datenbank des ersten Attribut-Provider-Computersystems, oder das erste Attribut-Provider-Computersystem greift auf eine externe Datenbank zu, um diese Attribute gemäß der zweiten Attributspezifikation zu lesen. Alternativ ist es auch möglich, dass das erste Attribut-Provider-Computersystem selbst ein oder mehrere der Attribute gemäß der zweiten Attributspezifikation generiert. Auf diese Art und Weise ermittelt das erste Attribut-Provider-Computersystem eine "erste Menge" verfügbarer Attribute, wobei unter einer "ersten Menge" hier diejenigen Attribute gemäß der zweiten Attributspezifikation verstanden werden, welche für das erste Attribut-Provider-Computersystem ermittelbar, d.h. verfügbar sind, das heißt auf welche das erste Attribut-Provider-Computersystem beispielsweise durch einen Datenbankzugriff zugreifen kann oder welche das erste Attribut-Provider-Computersystem erzeugen, wie zum Beispiel berechnen, kann.
13. Das erste Attribut-Provider-Computersystem erzeugt dann eine dritte Attributspezifikation einer dritten Teilmenge der zweiten Attributspezifikation, die diejenigen Attribute der zweiten Teilmenge spezifiziert, die in der ersten Menge verfügbarer Attribute nicht beinhaltet sind. Die dritte Attributspezifikation spezifiziert also eine dritte Teilmenge von Attributen, die in der zweiten Attributspezifikation spezifiziert sind, welche aber in der ersten Menge verfügbarer Attribute nicht beinhaltet sind, das heißt die dritte Attributspezifikation spezifiziert diejenigen noch fehlenden Attribute, die weder von dem ID-Provider-Computersystem aus dem ID-Token gelesen werden konnten, noch von dem ersten Attribut-Provider-Computersystem ermittelbar sind.
14. Das erste Attribut-Provider-Computersystem sendet dann ein zweites Umschaltkommando über den zweiten gesicherten Übertragungskanal an den ID-Token, wobei der ID-Token aufgrund des Empfangs des zweiten Umschaltkommandos von dem zweiten gesicherten Übertragungskanal auf den lokalen gesicherten Übertragungskanal umschaltet.
15. Das erste Attribut-Provider-Computersystem überträgt dann eine Signaturanfrage zur Erzeugung einer digitalen Signatur der dritten Attributspezifikation an das Nutzer-Computersystem. Dies kann beispielsweise über eine zwischen dem Nutzer-Computersystem und dem ersten Attribut-Provider-Computersystem aufgebaute Session, insbesondere eine Internetsession, erfolgen.
16. Die Signaturanfrage wird von dem Nutzer-Computersystem über den lokalen gesicherten Übertragungskanal, auf den der ID-Token zuvor umgeschaltet hatte, an den ID-Token weitergeleitet.
17. Der ID-Token erzeugt dann eine digitale Signatur der dritten Attributspezifikation, wobei es sich hierbei um eine pseudonyme Signatur handeln kann. Hierzu greift der ID-Token auf seinen privaten Schlüssel zu, der in einem gesicherten Speicherbereich des ID-Tokens gespeichert ist, um mit dem privaten Schlüssel die digitale Signatur der dritten Attributspezifikation zu generieren.
18. Der ID-Token empfängt dann ein drittes Umschaltkommando, beispielsweise von dem Nutzer-Computersystem, um von dem lokalen gesicherten Übertragungskanal auf den zweiten gesicherten Übertragungskanal zurückzuschalten.
19. Über diesen zweiten gesicherten Übertragungskanal wird dann die signierte dritte Attributspezifikation von dem ID-Token an das erste Attribut-Provider-Computersystem übertragen.
20. Das erste Attribut-Provider-Computersystem leitet die signierte dritte Attributspezifikation an ein zweites Attribut-Provider-Computersystem weiter. Dies kann beispielsweise über eine zwischen dem ersten Attribut-Provider-Computersystem und dem zweiten Attribut-Provider-Computersystem bestehende Netzwerkverbindung, wie zum Beispiel eine Internetsession, erfolgen. Vorzugsweise prüft das zweite Attribut-Provider-Computersystem die Validität der Signatur der dritten Attributspezifikation, um deren Vertrauenswürdigkeit zu prüfen.
21. Das zweite Attribut-Provider-Computersystem ermittelt dann eine "zweite Menge" verfügbarer Attribute gemäß der dritten Attributspezifikation, gegebenenfalls unter der Voraussetzung der erfolgreichen Prüfung der Signatur der dritten Attributspezifikation. Unter der "zweiten Menge" werden hier diejenigen Attribute der dritten Attributspezifikation verstanden, welche für das zweite Attribut-Provider-Computersystem ermittelbar sind, indem das zweite Attribut-Provider-Computersystem beispielsweise auf eine mit dem zweiten Attribut-Provider-Computersystem gekoppelte Datenbank zugreift oder indem das zweite Attribut-Provider-Computersystem diese Attribute erzeugt, beispielsweise berechnet.
22. Die zweite Menge der verfügbaren Attribute wird dann von dem zweiten Attribut-Provider-Computersystem über die Netzwerkverbindung an das erste Attribut-Provider-Computersystem übertragen.
23. Das erste Attribut-Provider-Computersystem führt dann einen Schreibzugriff über den zweiten gesicherten Übertragungskanal durch, um die Attribute der ersten und zweiten Menge gemäß der zweiten Attributspezifikation in dem ID-Token zu speichern.
24. Das erste Attribut-Provider-Computersystem sendet dann ein viertes Umschaltkommando an den ID-Token über den zweiten gesicherten Übertragungskanal, sodass das ID-Token auf den ersten gesicherten Übertragungskanal umschaltet.
25. Das ID-Provider-Computersystem führt dann einen zweiten Lesezugriff durch, und zwar über den noch bestehenden ersten gesicherten Übertragungskanal, um die noch fehlenden Attribute gemäß der zweiten Attributspezifikation aus dem ID-Token zu lesen, die zwischenzeitlich dort in dem Schritt 23 von dem Attribut-Provider-Computersystem gespeichert worden sind.
26. Die nun insgesamt in dem ID-Provider-Computersystem vorliegenden Attribute gemäß der ersten Attributspezifikation werden an das Dienst-Computersystem ausgegeben, damit dieses den angeforderten Dienst erbringen kann. Diese Ausgabe kann unmittelbar von dem ID-Provider-Computersystem an das Dienst-Computersystem erfolgen, wenn das ID-Provider-Computersystem einen integralen Bestandteil des Dienst-Computersystems bildet, oder über das Netzwerk, wobei vorzugsweise die von dem ID-Provider-Computersystem ausgegebenen Attribute von dem ID-Provider-Computersystem signiert werden, um Manipulationen zu unterbinden.

Ausführungsformen der Erfindung sind besonders vorteilhaft, da sie die Einbeziehung eines zusätzlicher Attribut-Provider-Computersysteme ermöglichen, welche Attribute liefern können, die in dem ID-Token zunächst nicht vorhanden sind. Dies kann mit der gleichen Sicherheit und Vertrauenswürdigkeit erfolgen, wie es für die ursprünglich in dem ID-Token gespeicherten Attribute der Fall ist und auch unter Wahrung der informationellen Selbstbestimmung des Nutzers und dem Gebot der Datensparsamkeit, da keine Mitteilung der in dem ID-Token ursprünglich gespeicherten Attribute an die Attribut-Provider-Computersysteme erfolgen muss.

Nach einer Ausführungsform erfolgt die Speicherung der Attribute in dem oben genannten Schritt 23 in dem nichtflüchtigen elektronischen Speicher des ID-Tokens, sodass diese zusätzlich von dem Attribut-Provider-Computersystem in den ID-Token geschriebenen Attribute zur weiteren Verwendung zur Verfügung stehen. Bei einer nachfolgenden Dienstanforderung des Nutzers an das Dienst-Computersystem müssen also diese zusätzlichen Attribute nicht erneut über die Attribut-Provider-Computersysteme beschafft werden, sondern stehen in dem ID-Token bereits zur Verfügung, sodass sie bereits in dem oben genannten Schritt 6 von dem ID-Provider-Computersystem ausgelesen werden können.

Nach einer Ausführungsform der Erfindung ist die Kommunikationsschnittstelle des ID-Tokens drahtlos ausgebildet, das heißt beispielsweise als sogenannte RFID-oder NFC-Schnittstelle. Neben der drahtlosen Kommunikation dient diese Schnittstelle auch zur Einkopplung von Energie in den ID-Token, um diesen mit der für seinen Betrieb erforderlichen elektrischen Energie zu versorgen. Zusätzlich zu dem nichtflüchtigen elektronischen Speicher hat der ID-Token einen flüchtigen elektronischen Speicher, wie zum Beispiel ein RAM oder einen Arbeitsspeicher des Prozessors. Die zweite Attributspezifikation wird vorzugsweise in den flüchtigen elektronischen Speicher geschrieben (vergleiche oben Schritt 9). Wird nämlich nach dem Schritt 9 der ID-Token aus der Reichweite des Lesegeräts entfernt, so führt dies dazu, dass die zweite Attributspezifikation aus dem flüchtigen elektronischen Speicher gelöscht wird. Ein neuer Protokollablauf ist in diesem Fall zu starten. Hierdurch wird vermieden, dass sich der ID-Token in einem undefinierten Zustand befindet, wenn er zum Beispiel nach dem oben genannten Schritt 9 aus der Reichweite des Lesegeräts entfernt wird, um eventuelle Missbrauchsmöglichkeiten hierdurch zu unterbinden.
Wird die zweite Attributspezifikation in den nicht-flüchtigen elektronischen Speicher geschrieben, bleibt auch nach Entfernung des ID-Tokens aus der Reichweite des Lesegeräts die zweite Attributspezifikation im Speicher erhalten.

Falls auch das zweite Attribut-Provider-Computersystem nicht sämtliche der noch fehlenden Attribute liefern kann, kann dieser Vorgang iterativ solange durchgeführt werden, bis eine Abbruchbedingung erreicht ist. Beispielsweise wird dieser iterative Vorgang dann abgeschlossen, wenn sämtliche der Attribute gemäß der ersten Attributspezifikation in dem ID-Token gespeichert worden sind, da dann keine weiteren Attribut-Provider-Computersysteme mehr involviert werden müssen. Ferner kann ein Abbruch auch dann erfolgen, wenn eine maximale Anzahl von Schreibzugriffen erreicht ist und/oder eine maximale Zeitdauer, das heißt ein sogenanntes Time-out. Im Weiteren wird aber davon ausgegangen, dass die ersten und zweiten Mengen der Attribute sämtliche Attribute der dritten Attributspezifikation sind, so dass insgesamt alle Attribute gemäß der ersten Attributspezifikation vorliegen, die das Dienst-Computersystem benötigt.

Nach einer Ausführungsform der Erfindung werden die aufgrund eines Schreibzugriffs eines der Attribut-Provider-Computersysteme in dem ID-Token zu speichernden Attribute auf einer Anzeigevorrichtung, das heißt einem sogenannten Display, angezeigt, damit der Nutzer diese Attribute zur Kenntnis nehmen kann. Vorzugsweise ist vor dem Schreiben der Attribute die Eingabe einer Bestätigung des Nutzers erforderlich.

In einem weiteren Aspekt betrifft die Erfindung einen ID-Token, der zur Verwendung in einem erfindungsgemäßen Verfahren konfiguriert ist.

In einem weiteren Aspekt betrifft die Erfindung ein Attribut-Provider-Computersystem, welches zur Verwendung in einem erfindungsgemäßen Verfahren konfiguriert ist.

In einem weiteren Aspekt betrifft die Erfindung ein Computersystem mit zumindest einem erfindungsgemäßen ID-Token und einem ID-Provider-Computersystem, welches zur Ausführung eines erfindungsgemäßen Verfahrens konfiguriert ist. Zu diesem Computersystem kann auch zumindest ein erfindungsgemäßes Attribut-Provider-Computersystem gehören.

Im Weiteren werden Ausführungsformen der Erfindung mit Bezugnahme auf die Zeichnungen näher erläutert. Es zeigen:
- Figur 1: ein Blockdiagramm einer Ausführungsform eines erfindungsgemäßen Computersystems,
- Figur 2: ein Flussdiagramm einer Ausführungsform eines erfindungsgemäßen Verfahrens,
- Figur 3: ein UML-Diagramm einer Ausführungsform eines erfindungsgemäßen Verfahrens,

Elemente der nachfolgenden Ausführungsformen, die einander gleichen oder einander entsprechen, sind jeweils mit identischen Bezugszeichen gekennzeichnet.

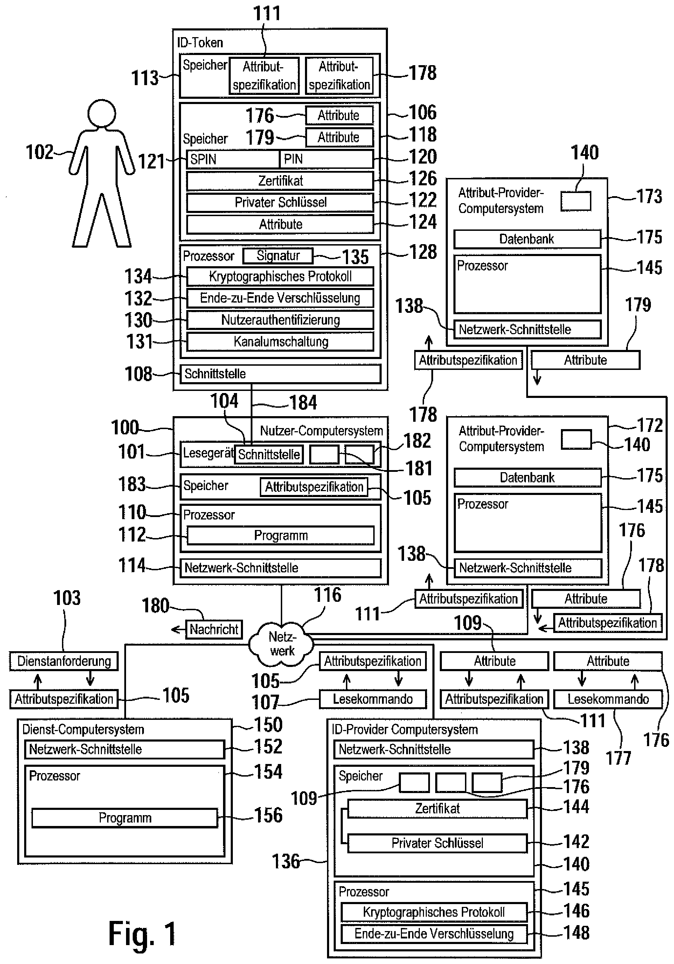

Die Figur 1 zeigt ein Nutzer-Computersystem 100 eines Nutzers 102. Bei dem Nutzer-Computersystem 100 kann es sich um einen Personalcomputer, einen tragbaren Computer, wie zum Beispiel einen Laptop oder Palmtop-Computer, einen Personal Digital Assistant, ein mobiles Telekommunikationsgerät, insbesondere ein Smart Phone, oder dergleichen handeln. Das Nutzer-Computersystem 100 hat ein Lesegerät 101 mit einer Schnittstelle 104 zur Kommunikation mit einem ID-Token 106, der eine entsprechende Schnittstelle 108 aufweist.

Das Nutzer-Computersystem 100 hat zumindest einen Prozessor 110 zur Ausführung von Programminstruktionen 112 sowie eine Netzwerk-Schnittstelle 114 zur Kommunikation über ein Netzwerk 116. Bei dem Netzwerk kann es sich um ein Computernetzwerk, wie zum Beispiel das Internet, handeln.

Der ID-Token 106 hat einen elektronischen Speicher 118 mit geschützten Speicherbereichen 120, 122 und 124. Der geschützte Speicherbereich 120 dient zur Speicherung eines Referenzwerts, der für die Authentifizierung des Nutzers 102 gegenüber dem ID-Token 106 benötigt wird. Bei diesem Referenzwert handelt es sich beispielsweise um eine Kennung, insbesondere eine so genannte Personal Identification Number (PIN), oder um Referenzdaten für ein biometrisches Merkmal des Nutzers 102, welches für die Authentifizierung des Nutzers gegenüber dem ID-Token 106 verwendet werden kann.

Der geschützte Bereich 122 dient zur Speicherung eines privaten Schlüssels und der geschützte Speicherbereich 124 dient zur Speicherung von Attributen, zum Beispiel des Nutzers 102, wie zum Beispiel dessen Name, Wohnort, Geburtsdatum, Geschlecht, und/oder von Attributen, die den ID-Token selbst betreffen, wie zum Beispiel die Institution, die den ID-Token erstellt oder ausgegeben hat, die Gültigkeitsdauer des ID-Tokens, einen Identifikator des ID-Tokens, wie zum Beispiel eine Passnummer oder eine Kreditkartennummer.

Der elektronische Speicher 118 kann ferner einen Speicherbereich 126 zur Speicherung eines Zertifikats aufweisen. Das Zertifikat beinhaltet einen öffentlichen Schlüssel, der dem in dem geschützten Speicherbereich 122 gespeicherten privaten Schlüssel zugeordnet ist. Das Zertifikat kann nach einem Public Key Infrastruktur (PKI) Standard erstellt worden sein, beispielsweise nach dem X.509 Standard.

Das Zertifikat muss nicht zwangsläufig in dem elektronischen Speicher 118 des ID-Tokens 106 gespeichert sein. Alternativ oder zusätzlich kann das Zertifikat auch in einem öffentlichen Verzeichnisserver gespeichert sein.

Der ID-Token 106 hat einen Prozessor 128. Der Prozessor 128 dient zur Ausführung von Programminstruktionen 130, 132 und 134. Die Programminstruktionen 130 dienen zur Nutzerauthentifizierung, d.h. zur Authentifizierung des Nutzers 102 gegenüber dem ID-Token,

Bei einer Ausführungsform mit PIN gibt der Nutzer 102 seine PIN zu seiner Authentifizierung ein, beispielsweise in das Nutzer-Computersystem 100. Durch Ausführung der Programminstruktionen 130 wird dann auf den geschützten Speicherbereich 120 zugegriffen, um die eingegebene PIN mit dem dort gespeicherten Referenzwert der PIN zu vergleichen. Für den Fall, dass die eingegebene PIN mit dem Referenzwert der PIN übereinstimmt, gilt der Nutzer 102 als authentifiziert.

Alternativ wird ein biometrisches Merkmal des Nutzers 102 erfasst. Beispielsweise hat der ID-Token 106 hierzu einen Fingerabdrucksensor oder ein Fingerabdrucksensor ist an das Nutzer-Computersystem 100 angeschlossen. Die von dem Nutzer 102 erfassten biometrischen Daten werden durch Ausführung der Programminstruktionen 130 bei dieser Ausführungsform mit den in dem geschützten Speicherbereich 120 gespeicherten biometrischen Referenzdaten verglichen. Bei hinreichender Übereinstimmung der von dem Nutzer 102 erfassten biometrischen Daten mit den biometrischen Referenzdaten gilt der Nutzer 102 als authentifiziert.

Die Programminstruktionen 134 dienen zur Ausführung der den ID-Token 106 betreffenden Schritte eines kryptographischen Protokolls zur Authentifizierung eines ID-Provider-Computersystems 136 gegenüber dem ID-Token 106. Bei dem kryptographischen Protokoll kann es sich um ein Challenge-Response-Protokoll basierend auf einem symmetrischen Schlüssel oder einem asymmetrischen Schlüsselpaar handeln.

Beispielsweise wird durch das kryptographische Protokoll ein Extended Access Control-Verfahren implementiert, wie es für maschinenlesbare Reisedokumente (machine-readable travel documents - MRTD) von der internationalen Luftfahrtbehörde (ICAO) spezifiziert ist. Durch erfolgreiche Ausführung des kryptographischen Protokolls authentifiziert sich das ID-Provider-Computersystem 136 gegenüber dem ID-Token und weist dadurch seine Leseberechtigung zum Lesen der in dem geschützten Speicherbereich 124 gespeicherten Attribute nach. Die Authentifizierung kann auch gegenseitig sein, d.h. auch der ID-Token 106 muss sich dann gegenüber dem ID-Provider-Computersystem 136 nach demselben oder einem anderen kryptographischen Protokoll authentifizieren.

Die Programminstruktionen 132 dienen zur Ende-zu-Ende-Verschlüsselung von zwischen dem ID-Token 106 und dem ID-Provider-Computersystem 136 übertragenen Daten, zumindest aber der von dem lD-Provider-Computersystem 136 aus dem geschützten Speicherbereich 124 ausgelesenen Attribute. Für die Ende-zu-Ende-Verschlüsselung kann ein symmetrischer Schlüssel verwendet werden, der beispielsweise anlässlich der Ausführung des kryptographischen Protokolls zwischen dem ID-Token 106 und dem ID-Provider-Computersystem 136 vereinbart wird.

Alternativ zu der in der Figur 1 dargestellten Ausführungsform kann das Nutzer-Computersystem 100 mit seiner Schnittstelle 104 nicht unmittelbar mit der Schnittstelle 108 kommunizieren, sondern über ein an die Schnittstelle 104 angeschlossenes Lesegerät für den ID-Token 106. Über dieses Lesegerät, wie zum Beispiel einen so genannten Klasse 2-Chipkarten-Terminal, kann auch die Eingabe der PIN erfolgen.

Das ID-Provider-Computersystem 136 hat eine Netzwerk-Schnittstelle 138 zur Kommunikation über das Netzwerk 116. Das ID-Provider-Computersystem 136 hat ferner einen Speicher 140, in dem ein privater Schlüssel 142 des ID-Provider-Computersystems 136 sowie das entsprechende Zertifikat 144 gespeichert ist. Auch bei diesem Zertifikat kann es sich beispielsweise um ein Zertifikat nach einem PKI-Standard, wie zum Beispiel X.509 handeln.

Das ID-Provider-Computersystem 136 hat ferner zumindest einen Prozessor 145 zur Ausführung von Programminstruktionen 146 und 148. Durch Ausführung der Programminstruktionen 146 werden die das ID-Provider-Computersystem 136 betreffende Schritte des kryptographischen Protokolls ausgeführt. Insgesamt wird also das kryptographische Protokoll durch Ausführung der Programminstruktionen 134 durch den Prozessor 128 des ID-Tokens 106 sowie durch Ausführung der Programminstruktionen 146 durch den Prozessor 145 des ID-Provider-Computersystems 136 implementiert.

Die Programminstruktionen 148 dienen zur Implementierung der Ende-zu-Ende-Verschlüsselung auf Seiten des ID-Provider-Computersystems 136, beispielsweise basierend auf dem symmetrischen Schlüssel, der anlässlich der Ausführung des kryptographischen Protokolls zwischen dem ID-Token 106 und dem ID-Provider-Computersystem 136 vereinbart worden ist. Prinzipiell kann jedes an sich vor bekannte Verfahren zur Vereinbarung des symmetrischen Schlüssels für die Ende-zu-Ende-Verschlüsselung verwendet werden, wie zum Beispiel ein Diffie-Hellman-Schlüsselaustausch.

Das ID-Provider-Computersystem 136 befindet sich vorzugsweise in einer besonders geschützten Umgebung, insbesondere in einem so genannten Trust-Center, sodass das ID-Provider-Computersystem 136 in Kombination mit der Notwendigkeit der Authentifizierung des Nutzers 102 gegenüber dem ID-Token 106 den Vertrauensanker für die Authentizität der aus dem ID-Token 106 ausgelesenen Attribute bildet.

Ein Dienst-Computersystem 150 kann zur Entgegennahme einer Bestellung oder eines Auftrags für eine Dienstleistung oder ein Produkt, insbesondere eine Online-Dienstleistung, ausgebildet sein. Beispielsweise kann der Nutzer 102 online über das Netzwerk 116 ein Konto bei einer Bank eröffnen oder eine andere Finanz- oder Bankdienstleistung in Anspruch nehmen. Das Dienst-Computersystem 150 kann auch als Online-Warenhaus ausgebildet sein, sodass der Benutzer 102 beispielsweise online ein Mobiltelefon oder dergleichen erwerben kann. Ferner kann das Dienst-Computersystem 150 auch zur Lieferung von digitalen Inhalten ausgebildet sein, beispielsweise für den Download von Musik- und/oder Videodaten oder als Behördenserver für eine eGovernment Anwendung.

Das Dienst-Computersystem 150 hat hierzu eine Netzwerk-Schnittstelle 152 zur Verbindung mit dem Netzwerk 116. Ferner hat das Dienst-Computersystem 150 zumindest einen Prozessor 154 zur Ausführung von Programminstruktionen 156. Durch Ausführung der Programminstruktionen 156 werden beispielsweise dynamische HTML-Seiten generiert, über die der Nutzer 102 seinen Auftrag oder seine Bestellung eingeben kann.

Je nach der Art des beauftragten oder bestellten Produkts oder der Dienstleistung muss das Dienst-Computersystem 150 Attribute des Nutzers 102 und/oder dessen ID-Token 106 anhand eines oder mehrerer vorgegebener Kriterien überprüfen. Nur wenn diese Prüfung bestanden wird, wird die Bestellung oder der Auftrag des Nutzers 102 entgegengenommen und/oder ausgeführt.

Beispielsweise ist es für die Eröffnung eines Bankkontos oder den Kauf eines Mobiltelefons mit einem dazugehörigen Vertrag erforderlich, dass der Nutzer 102 seine Identität gegenüber dem Dienst-Computersystem 150 offenbart, und dass diese Identität überprüft wird. Im Stand der Technik muss der Nutzer 102 hierzu beispielsweise seinen Personalausweis vorlegen. Dieser Vorgang wird durch das Auslesen der digitalen Identität des Nutzers 102 aus seinem ID-Token 106 ersetzt.

Je nach Anwendungsfall können für die Erbringung des Dienstes weitere Attribute erforderlich sein, die in dem ID-Token zunächst nicht vorhanden sind. Hierzu kann das in der Figur 1 gezeigte Computersystem Attribut-Provider-Computersysteme 172 und 173aufweisen. Diese können prinzipiell gleich aufgebaut sein wie das ID-Provider-Computersystem und verfügen über zusätzliche Funktionalitäten zum Lesen oder Generieren von Attributen sowie zum Schreiben von Attributen und erforderlichenfalls Attributspezifikationen in den ID-Token.

Zur Inanspruchnahme eines von dem Dienst-Computersystem 150 zur Verfügung gestellten Dienstes wird beispielsweise wie folgt vorgegangen:
a) Der Nutzer 102 baut mithilfe seines Nutzer-Computersystems 100 eine Internetsession über das Netzwerk 116 zu dem Dienst-Computersystem 150 auf. Über diese Internetsession wird eine Dienstanforderung 103 von dem Nutzer-Computersystem 100 an das Dienst-Computersystem 150 übertragen, womit der Nutzer 102 die Erbringung eines Dienstes des Dienst-Computersystems 150 anfordert. Das Dienst-Computersystem 150 antwortet auf diese Dienstanforderung 103 mit einer ersten Attributspezifikation 105, die diejenigen Attribute spezifiziert, die für die Erbringung des mit der Dienstanforderung 103 angeforderten Dienstes zu erfüllen sind. Diese erste Attributspezifikation spezifiziert beispielsweise eine Anzahl von M Attributen A1, A2, A3, ... AM.
b) Beispielsweise wird die Attributspezifikation 105 in einem Speicher 183 des Nutzer-Computersystems 100 zwischengespeichert. Aufgrund des Empfangs der Attributspezifikation 105 durch das Nutzer-Computersystem 100 wird der Nutzer 102 dazu aufgefordert, sich gegenüber dem ID-Token 106 zu authentifizieren. Hierzu gibt der Nutzer 102 seine PIN zum Beispiel über das Lesegerät 101 oder eine Tastatur des Nutzer-Computersystems 100 ein. tZur Verifikation der PIN wird zwischen dem Nutzer-Computersystem 100, das heißt dessen Lesegerät 101, und dem ID-Token 106 ein lokaler gesicherter Übertragungskanal aufgebaut, beispielsweise mithilfe eines Diffie-Hellman Schlüsselaustausches, insbesondere nach dem vom Bundesamt für Sicherheit in der Informationsverarbeitung (BSI) spezifizierten PACE-Protokoll. Ferner baut das Nutzer-Computersystem 100 zu dem ID-Provider-Computersystem 136 eine weitere Internetsession über das Netzwerk 116 auf, über die sich das ID-Provider-Computersystem 136 gegenüber dem Nutzer-Computersystem 100 authentifiziert, und zwar unter Verwendung des Zertifikats 144.
   Vorzugsweise erfolgt eine gegenseitige Authentifizierung des IT-Tokens 106 und des ID-Provider-Computersystems 136 bzw. des jeweiligen Attribut-Provider-Computersystems unter Verwendung der Zertifikate 126 und 144, das heißt eine sogenannte CA und eine TA. Hierbei wird auch ein Session Key vereinbart, mit dem der erste gesicherte Übertragungskanal mit Ende-zu-Ende-Verschlüsselung zwischen dem ID-Token 106 und dem ID-Provider-Computersystem über das Nutzer-Computersystem 100 und das Netzwerk 116 aufgebaut wird, wobei der lokale gesicherte Übertragungskanal bestehen bleibt. Ferner leitet das Nutzer-Computersystem 100 die Attributspezifikation 105 über die mit dem ID-Provider-Computersystem 136 bestehende Session an das ID-Provider-Computersystem 136 weiter.
c) Das ID-Provider-Computersystem 136 antwortet auf die erste Attributspezifikation 105 mit einem Lesekommando 107 zum Lesen der in der ersten Attributspezifikation spezifizierten Attribute. Dieses Lesekommando 107 wird über den ersten gesicherten Übertragungskanal mit Ende-zu-Ende-Verschlüsselung von dem ID-Provider-Computersystem 136 an den ID-Token 106 übertragen. Der Prozessor 128 greift daraufhin auf den elektronischen Speicher 118 zu, um die Attribute gemäß der ersten Attributspezifikation 105 auszulesen. Im Weiteren wird ohne Beschränkung der Allgemeinheit davon ausgegangen, dass von den M Attributen gemäß der ersten Attributspezifikation 105 nur P Attribute A1, A2, A3, ..., AP vorhanden sind, wobei P < M. Auf das Lesekommando 107 antwortet der ID-Token 106 mit der Antwort 109, die die erste Teilmenge der in der ersten Attributspezifikation 105 spezifizierten Attribute, nämlich die Attribute A1, A2, A3, ..., AP beinhaltet. Die Antwort 109 wird über den ersten gesicherten Übertragungskanal von dem ID-Token 106 an das ID-Provider-Computersystem 136 übertragen.
d) Das ID-Provider-Computersystem 136 speichert die Antwort 109 mit der ersten Teilmenge der Attribute in seinem Speicher 140 und erzeugt eine zweite Attributspezifikation 111, welche die noch fehlenden Attribute spezifiziert, das heißt diejenigen der in der ersten Attributspezifikation 105 spezifizierten Attribute, die in der Antwort 109 nicht beinhaltet sind, das heißt hier die Attribute AP+1 bis AM. Die zweite Attributspezifikation 111 wird über den ersten gesicherten Übertragungskanal von dem ID-Provider-Computersystem 136 zu dem ID-Token 106 übertragen und dort gespeichert. Die Speicherung kann beispielsweise in einem flüchtigen Speicher 113 des IT-Tokens 106 erfolgen.
e) Das ID-Provider-Computersystem 136 sendet dann ein erstes Umschaltkommando über den ersten gesicherten Übertragungskanal an den ID-Token. Der ID-Token verarbeitet das Umschaltkommando durch Ausführung der Programminstruktionen 131, wodurch der ID-Token 106 auf den lokalen gesicherten Übertragungskanal umschaltet, über den dann die weitere Kommunikation mit dem Nutzer-Computersystem 100 erfolgt.
f) Das Nutzer-Computersystem 100 baut eine weitere Internetsession über das Netzwerk 116 mit dem Attribut-Provider-Computersystem 172 auf. Das Attribut-Provider-Computersystem 172 authentifiziert sich dann gegenüber dem ID-Token 106, wobei vorzugsweise eine gegenseitige Authentifizierung, das heißt eine CA und eine TA, durchgeführt werden. Hierbei wird ein zweiter gesicherter Übertragungskanal mit Ende-zu-Ende-Verschlüsselung mit einem Session Key zwischen dem ID-Token 106 und dem Attribut-Provider-Computersystem 172 über das Netzwerk 116 und das Nutzer-Computersystem 100 aufgebaut, wobei der erste gesicherte Übertragungskanal bestehen bleibt.
   Der Prozessor 128 dient zur Ausführung von Programminstruktionen 131 für die Kanalumschaltung, das heißt die Auswahl einer der gesicherten Übertragungskanäle, das heißt hier insbesondere des ersten oder des zweiten gesicherten Übertragungskanals, für die externe Kommunikation. Aufgrund des Aufbaus des zweiten gesicherten Übertragungskanals wird durch Ausführung der Programminstruktionen 131 der zweite gesicherte Übertragungskanal von dem Prozessor 128 ausgewählt, über den der ID-Token 106 dann die zweite Attributspezifikation 111 an das Attribut-Provider-Computersystem 172 sendet.
g) Das Attribut-Provider-Computersystem 172 führt daraufhin einen Zugriff auf seine Datenbank 175 durch, um die Attribute gemäß der zweiten Attributspezifikation 111 zu lesen. Durch diesen Datenbankzugriff ermittelt das erste Attribut-Provider-Computersystem 172 diejenigen Attribute gemäß der zweiten Attributspezifikation 111, auf welche das erste Attribut-Provider-Computersystem zugreifen kann, das heißt welche für das erste Attribut-Provider-Computersystem verfügbar sind. Diese für das erste Attribut-Provider-Computersystem verfügbaren Attribute der zweiten Attributspezifikation werden als "erste Menge" bezeichnet.
h) Falls das Attribut-Provider-Computersystem 172 nicht sämtliche der Attribute gemäß der zweiten Attributspezifikation 111 ermitteln kann, so generiert das Attribut-Provider-Computersystem 172 eine dritte Attributspezifikation 178. Wenn beispielsweise die Antwort 176 die Attribute AP+1 bis AQ beinhaltet mit Q < M, so werden in der dritten Attributspezifikation 178 die noch fehlenden Attribute AQ+1 bis AM spezifiziert. Diese dritte Attributspezifikation 178 wird von dem Attribut-Provider-Computersystem 172 über den zweiten gesicherten Übertragungskanal zu dem ID-Token 106 übertragen.
i) Das erste Attribut-Provider-Computersystem 172 überträgt anschließend ein zweites Umschaltkommando an den ID-Token 106, und zwar über den zweiten gesicherten Übertragungskanal, sodass aufgrund der Ausführung der Programminstruktionen 131, welche das zweite Umschaltkommando verarbeiten, der ID-Token 106 auf den lokalen gesicherten Übertragungskanal umschaltet.
j) Das erste Attribut-Provider-Computersystem 172 generiert eine Signaturanfrage zur Erzeugung einer digitalen Signatur der dritten Attributspezifikation und sendet diese Signaturanfrage an das Nutzer-Computersystem 100. Dies kann über eine weitere Internetsession, die zwischen dem Attribut-Provider-Computersystem 172 und dem Nutzer-Computersystem 100 besteht, erfolgen. Über diese Internetsession kann das erste Attribut-Provider-Computersystem 172 optional zuvor bei dem Nutzer über das Nutzer-Computersystem anfragen, ob der Nutzer 102 die Signaturanforderung genehmigt. In diesem Fall erfolgt die Versendung der Signaturanfrage von dem ersten Attribut-Provider-Computersystem 172 an das Nutzer-Computersystem 100 erst nach Empfang einer Bestätigung des Nutzers 102 über die mit dem Nutzer-Computersystem 100 bestehende Internetsession.
k) Das Nutzer-Computersystem 100 leitet die Signaturanfrage des ersten Attribut-Provider-Computersystems über den lokalen gesicherten Übertragungskanal, auf welchen der ID-Token 106 zuvor aufgrund des zweiten Umschaltkommandos umgeschaltet hatte, weiter, sodass der ID-Token 106 anschließend die digitale Signatur der dritten Attributspezifikation 178 erzeugt, und zwar durch Ausführung von Programminstruktionen 135 durch den Prozessor 128 des lD-Tokens 106, welcher einen Generator zur Erzeugung digitalen Signaturen bilden, wobei dies unter Verwendung zum Beispiel des privaten Schlüssels 122 erfolgt. Optional wird zuvor von dem Nutzer 102 des Signatur-PIN abgefragt, um die Ausführung der Programminstruktionen 135 freizuschalten. Dies kann zum Beispiel über eine Nutzerschnittstelle, wie zum Beispiel eine Tastatur des Nutzer-Computersystems 100 oder des Lesegeräts 101 erfolgen. Zur Freischaltung der Ausführung der Programminstruktionen 135 prüft der ID-Token 106, ob die von dem Nutzer 102 eingegebene Kennung mit dem in dem Speicher 118 gespeicherten Referenzwert für die Signatur-PIN (SPIN), der in dem geschützten Speicherbereich 121 gespeichert ist, übereinstimmt.
l) Das Nutzer-Computersystem 100 sendet dann ein drittes Umschaltkommando über den lokalen gesicherten Übertragungskanal an den ID-Token 106, sodass der ID-Token 106 von dem lokalen gesicherten Übertragungskanal auf den zweiten gesicherten Übertragungskanal umschaltet. Über diesen sendet der ID-Token 106 dann die signierte dritte Attributspezifikation an das erste Attribut-Provider-Computersystem 172. Das erste Attribut-Provider-Computersystem leitet die signierte dritte Attributspezifikation an das zweite Attribut-Provider-Computersystem 173 weiter.
m) Das zweite Attribut-Provider-Computersystem 173 ermittelt dann zum Beispiel durch einen Datenbankzugriff auf seine Datenbank 145 die Attribute gemäß der dritten Attributspezifikation, auf welche das zweite Attribut-Provider-Computersystem 173 zugreifen kann, das heißt die "zweite Menge", wobei hier ohne Beschränkung der Allgemeinheit davon ausgegangen wird, dass die zweite Menge sämtliche Attribute gemäß der dritten Attributspezifikation 178, das heißt sämtliche noch fehlende Attribute, beinhaltet. Vorzugsweise erfolgt dieser Datenbankzugriff zum Zugriff auf die noch fehlenden Attribute durch das Attribut-Provider-Computersystem 173 erst nach Prüfung der Validität der digitalen Signatur der dritten Attributspezifikation,
n) Das zweite Attribut-Provider-Computersystem 173 überträgt dann die zweite Menge der Attribute an das erste Attribut-Provider-Computersystem 172, welches dann die Attribute die ersten und zweiten Mengen durch einen Schreibzugriff über den zweiten gesicherten Übertragungskanal in den ID-Token 106 schreibt.
o) Schließlich sendet das erste Attribut-Provider-Computersystem 172 ein viertes Umschaltkommando über den zweiten gesicherten Übertragungskanal an den ID-Token 106, sodass der ID-Token 106 auf den ersten gesicherten Übertragungskanal zurückschaltet.
p) Das ID-Provider-Computersystem 136 führt dann einen zweiten Lesezugriff 177 über den ersten gesicherten Übertragungskanal zum Lesen der von dem ersten Attribut-Provider-Computersystem 172 in dem ID-Token 106 gespeicherten Attribute der ersten Menge 176 und der zweiten Menge 179 durch.

Das ID-Provider-Computersystem 136 verfügt nach einer erfolgreichen Durchführung der oben genannten Verfahrensschritte in seinem Speicher 140 über sämtliche der Attribute, die mit der ersten Attributspezifikation 105 angefordert worden sind. Das ID-Provider-Computersystem 136 generiert daraufhin eine Nachricht 180, die diese Attribute A1 bis AM beinhaltet, signiert diese Nachricht und sendet sie über das Netzwerk 116 an das Dienst-Computersystem 150, wobei dies über das Nutzer-Computersystem 100 erfolgen kann. Das Dienst-Computersystem 150 kann dann gegebenenfalls mithilfe der in der Nachricht 180 beinhalteten Attribute den mit der Dienstanforderung 103 angeforderten Dienst erbringen.

Die Attribut-Provider-Computersysteme 172, 173 ... können analog zu dem ID-Provider-Computersystem 136 aufgebaut sein, das heißt sie verfügen jeweils über eine Netzwerk-Schnittstelle 138, einen Prozessor 145 zur Ausführung von Programminstruktionen 146, 148 und einen Speicher 140, in dem ein Zertifikat und ein privater Schlüssel gespeichert sind. Bei dem Zertifikat handelt es sich vorzugsweise um ein Berechtigungszertifikat, in dem jeweils eine Berechtigung für Lese- und Schreibzugriffe auf den ID-Token 106 spezifiziert ist.

Nach einer Ausführungsform der Erfindung werden die Attribute der Mengen 176 und 179 erst dann in dem Speicher 118 gespeichert, nachdem diese der Nutzer 102 zur Kenntnis nehmen konnte. Hierzu werden diese Attribute auf einem Display 181 angezeigt, welches zum Beispiel zu dem Lesegerät 101 gehört. Ferner kann beispielsweise auf dem Lesegerät 101 ein Bedienelement 182 vorhanden sein, über welches der Nutzer 102 eine Eingabe tätigen muss, um die Speicherung der in den Antworten 176 bzw. 179 beinhalteten Attribute in dem Speicher 118 zu genehmigen. Hierdurch erhält der Nutzer 102 eine Kontrollmöglichkeit bezüglich der möglicherweise seine Person betreffenden zusätzlichen Attribute in dem Speicher 118.

Ausführungsformen der Erfindung sind besonders vorteilhaft, da neben den ersten und zweiten gesicherten Übertragungskanälen mit Ende-zu-Ende-Verschlüsselung zu dem ID-Token 106 kein weiterer solcher Übertragungskanal zu dem zweiten Attribut-Provider-Computersystem 173 und erforderlichenfalls weiteren Attribut-Provider-Computersystemen aufgebaut werden muss, da die dritte Attributspezifikation 178 von dem ID-Token 106 signiert wird, was je nach Ausführungsform nur aufgrund einer Bestätigung durch den Nutzer 102, zum Beispiel durch Eingabe von dessen Signatur-PIN, erfolgen kann. Insbesondere ist es möglich, dass die Erzeugung der digitalen Signatur der dritten Attributspezifikation 178 unter einem Pseudonym des Nutzers 102 erfolgt.

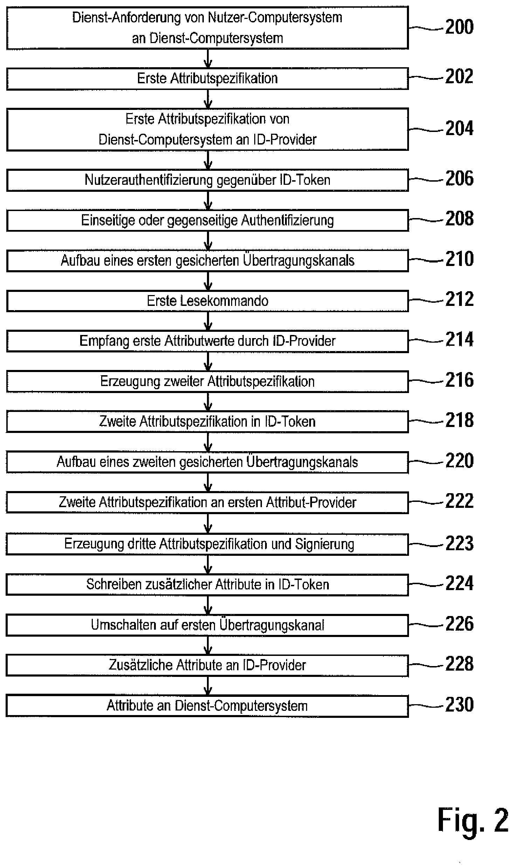

Die Figur 2 zeigt eine Ausführungsform eines entsprechenden erfindungsgemäßen Verfahrens. In dem Schritt 200 wird eine Dienstanforderung 103 von dem Nutzer-Computersystem 100 an das Dienst-Computersystem 150 gesendet. Das Dienst-Computersystem 105 erzeugt daraufhin eine Antwort mit der ersten Attributspezifikation 105 (Schritt 202), die in dem Schritt 204 an das ID-Provider-Computersystem 136 gesendet wird.

In dem Schritt 206 authentifiziert sich der Nutzer 102 gegenüber dem ID-Token 106 und es erfolgt in dem Schritt 208 eine einseitige oder gegenseitige Authentifizierung des ID-Tokens 106 und des ID-Provider-Computersystems 136, insbesondere mit einer CA und einer TA.

In dem Schritt 210 wird die erste gesicherte Verbindung aufgebaut, über welche das ID-Provider-Computersystem in dem Schritt 212 das erste Lesekommando 107 sendet. Auf das erste Lesekommando antwortet der ID-Token 106 in dem Schritt 214 mit den in der Antwort 109 beinhalteten Attributen A1 bis AP.

Daraufhin erzeugt das ID-Provider-Computersystem 136 in dem Schritt 216 die zweite Attributspezifikation 111, in der die noch fehlenden Attribute AP+1 bis AM spezifiziert sind und schreibt diese zweite Attributspezifikation 111 in dem Schritt 218 über den ersten gesicherten Übertragungskanal in den ID-Token 106, wo die Attributspezifikation 111 gespeichert wird.

Anschließend wird dann in dem Schritt 220 der zweite gesicherte Übertragungskanal zu dem Attribut-Provider-Computersystem 172 aufgebaut und die zweite Attributspezifikation 111 aus dem ID-Token 106 gelesen und zu dem ersten Attribut-Provider-Computersystem 172 übertragen.

Das erste Attribut-Provider-Computersystem 172 greift dann auf die laut zweiter Attributspezifikation 111 angeforderten Attribute zu, beispielsweise über einen Datenbankzugriff, Das erste Attribut-Provider-Computersystem 172 erzeugt dann erforderlichenfalls eine dritte Attributspezifikation 178, wenn nicht sämtliche der Attribute gemäß der zweiten Attributspezifikation 111 für das erste Attribut-Provider-Computersystem 172 verfügbar sind. Die Attribute gemäß der dritten Attributspezifikation 178 liefert in diesem Fall das zweite Attribut-Provider-Computersystem 173 an das erste Attribut-Provider-Computersystem 172, wie mit Bezug auf die Figur 1 oben erläutert. Das erste Attribut-Provider-Computersystem 172 schreibt diese zusätzlichen Attribute, in dem betrachteten Beispielsfall die Attribute AP+1 bis AM in dem Schritt 224 über den zweiten gesicherten Übertragungskanal in den ID-Token 106.

Der ID-Token 106 schaltet dann auf den ersten gesicherten Übertragungskanal in dem Schritt 226 zurück, sodass die zuvor in dem Schritt 224 zusätzlich in den ID-Token 106 geschriebenen Attribute von dem ID-Provider-Computersystem 136 über diesen ersten gesicherten Übertragungskanal aus dem ID-Token 106 ausgelesen werden (Schritt 228). In dem Schritt 230 überträgt das ID-Provider-Computersystem 136 dann sämtliche der aus dem ID-Token 106 gelesenen Attribute an das Dienst-Computersystem 150, sodass dieses dann gegebenenfalls nach Prüfung der Attribute den angeforderten Dienst erbringen kann.

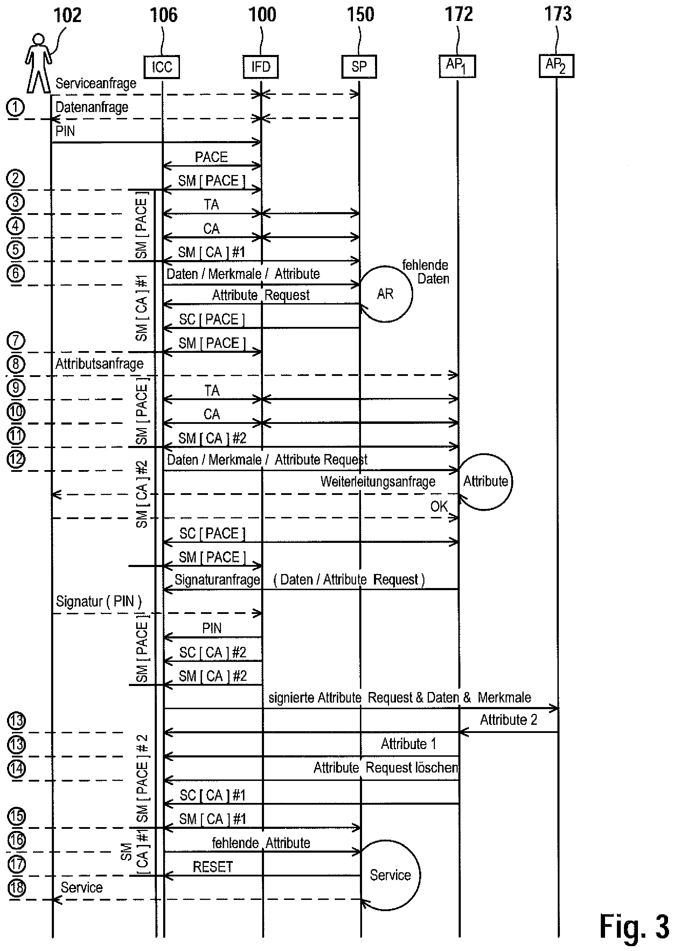

Die Figur 3 zeigt ein entsprechendes UML-Diagramm, wobei hier davon ausgegangen wird, dass das Dienst-Computersystem 150 das ID-Provider-Computersystem 136 beinhaltet.

In dem Schritt 1 wird durch den Nutzer 102 eine Serviceanfrage, das heißt eine Dienstanforderung 103, an das Dienst-Computersystem 150 gesendet, und zwar mithilfe des Nutzer-Computersystems 100. Das Dienst-Computersystem 150 antwortet darauf mit einer Datenanfrage, das heißt mit der ersten Attributspezifikation 105.

Daraufhin authentifiziert sich der Nutzer 102 gegenüber dem ID-Token 106, indem er seine PIN in das Nutzer-Computersystem 100, das heißt beispielsweise dessen Lesegerät 101, eingibt. Aufgrund der Ausführung beispielsweise des PACE-Protokolls wird die PIN verifiziert und in dem Schritt 2 wird mithilfe von PACE ein Secure Messaging-Kanal zwischen ID-Token und Nutzer-Computersystem, das heißt SM-[PACE], aufgebaut, wodurch hier der lokale gesicherte Übertragungskanal realisiert wird.

In dem Schritt 3 erfolgt dann auf dieser Basis eine TA des in dem Dienst-Computersystem 150 beinhalteten ID-Provider-Computersystems 136 sowie in dem Schritt 4 eine CA des ID-Tokens 106 gegenüber dem ID-Provider-Computersystem 136.

In dem Schritt 5 wird dann der erste gesicherte Übertragungskanal zwischen dem ID-Token 106 und dem ID-Provider-Computersystem aufgebaut, nämlich SM-[CA] #1.

Die weitere Kommunikation in dem Schritt 6 verläuft dann über diesen ersten gesicherten Übertragungskanal, nämlich das Auslesen von Attributen aus dem ID-Token 106 gemäß der ersten Attributspezifikation 105 und das anschließende Schreiben der zweiten Attributspezifikation 111, d.h. ein Attribute Request (AR). Ferner kann durch das ID-Provider-Computersystem 136 ein erstes Umschaltsignal SC-[PACE] erzeugt werden, welches durch die Programminstruktionen 131 seitens des ID-Tokens 106 verarbeitet wird, um auf den Übertragungskanal SM-[PACE] zwischen ID-Token und Nutzer-Computersystem zurückzuschalten.

In dem Schritt 8 kann optional eine Auswahl des ersten Attribut-Provider-Systems 172 durch den Nutzer 102 erfolgen. Auf eine solche explizite Auswahl kann auch verzichtet werden, wenn das Nutzer-Computersystem 100 das zu kontaktierende Attribut-Provider-Computersystem bereits kennt, beispielsweise wenn der Nutzer 102 vorab mit der Lieferung von Attributen durch das erste Attribut-Provider-Computersystem 172 sein Einverständnis erklärt hat. Entsprechendes gilt für die Attributsanfrage 2 gemäß Fig. 5. Eine solche Auswahl kann über eine Internet-Session erfolgen, die zwischen dem Nutzer-Computersystem 100 und dem ersten Attribut-Provider-Computersystem 172 aufgebaut wird.

Die Schritte 9 und 10 werden dann analog zu den Schritten 3 und 4 auf der Basis von SM-[PACE] durchgeführt, und zwar für eine TA des Attribut-Provider-Computersystems 172 bzw. eine CA des ID-Tokens 106 gegenüber dem Attribut-Provider-Computersystem 172.

In dem Schritt 10 wird dann der zweite gesicherte Übertragungskanal SM-[CA] #2 aufgebaut, über den dann die weitere Kommunikation in den Schritten 12, 13 und 14 erfolgt:
In dem Schritt 12 liest das Attribut-Provider-Computersystem 172 die zweite Attributspezifikation 111 und liest dann die entsprechenden Attribute der ersten Menge 176, beispielsweise durch einen Zugriff auf seine Datenbank 175. Der Zugriff auf die Attribute der zweiten Menge 179 erfolgt dann folgendermaßen:
- Das erste Attribut-Provider-Computersystem 172 erzeugt die dritte Attributspezifikation 178. Optional fragt das Attribut-Provider-Computersystem 172 über die mit dem Nutzer-Computersystem 100 bestehende Internetsession das Einverständnis des Nutzers 102 zur Weiterleitung der dritten Attributspezifikation an das zweite Attribut-Provider-Computersystem 173 ab und erhält daraufhin gegebenenfalls das "Okay" des Nutzers 102.
- Das erste Attribut-Provider-Computersystem 172 sendet dann das zweite Umschaltkommando SC[PACE] über den zweiten gesicherten Übertragungskanal an den ID-Token 106, woraufhin dieser auf den lokalen gesicherten Übertragungskanal schaltet.
- Das erste Attribut-Provider-Computersystem 172 sendet dann die Signaturanfrage zur Signierung der dritten Attributspezifikation 178 zum Beispiel über die zu dem Nutzer-Computersystem 100 bestehende Internetsession und das Nutzer-Computersystem 100 leitet diese Signaturanfrage über den lokalen gesicherten Übertragungskanal an den ID-Token 106 weiter.
- Optional wird der Nutzer 102 dann dazu aufgefordert, seine Signatur-PIN einzugeben, um die Ausführung der Programminstruktionen 135 zur Erzeugung einer digitalen Signatur freizuschalten. Die digitale Signatur wird dann von dem ID-Token 106 erzeugt und aufgrund eines dritten Umschaltkommandos des Nutzer-Computersystems 100 schaltet der ID-Token 106 auf den zweiten gesicherten Übertragungskanal, über den die signierte dritte Attributspezifikation dann an das erste Attribut-Provider-Computersystem 172 übertragen wird. Das erste Attribut-Provider-Computersystem 172 leitet die signierte dritte Attributspezifikation an das zweite Attribut-Provider-Computersystem 173, zum Beispiel über ein zwischen den beiden Attribut-Provider-Computersystemen 172 und 173 bestehende Internetsession, weiter. Das zweite Attribut-Provider-Computersystem 173 greift zum Beispiel durch Zugriff auf seine Datenbank 175 auf die zweite Menge 179 von Attributen, das heißt die "Attribute 2" und sendet diese an das erste Attribut-Provider-Computersystem 172. Vorzugsweise werden die Attribute 2 hierzu von dem Attribut-Provider-Computersystem 173 signiert, um Manipulationsversuche zu unterbinden.

Das Attribut-Provider-Computersystem 172 schreibt dann diese zusätzlichen Attribute, nämlich die Attribute 1 und die Attribute 2 der Mengen 176 bzw. 179 in den ID-Token 106 (Schritt 13) und löscht die dort gespeicherte zweite Attributspezifikation 111 (Schritt 14).

Ferner kann das Attribut-Provider-Computersystem 172 ein vierte Umschaltkommando generieren, nämlich SC-[CA] #1, welches von den Programminstruktionen 131 verarbeitet wird, um den Übertragungskanal auf den ersten gesicherten Übertragungskanal SM-[CA] #1 in dem Schritt 15 zurückzuschalten. Alternativ kann das Attribut-Provider-Computersystem 172 ein Umschaltsignal generieren, nämlich SC-[PACE], welches von den Programminstruktionen 131 verarbeitet wird, um zunächst den Übertragungskanal SM[PACE] zwischen ID-Token und Nutzer-Computersystem zurückzuschalten. Das Nutzer-Computersystem kann dann ein Umschaltsignal generieren, nämlich SC-[CA] #1, welches von den Programminstruktionen 131 verarbeitet wird, um den Übertragungskanal auf den ersten gesicherten Übertragungskanal
SM-[CA]#1 in dem Schritt 15 zurückzuschalten.

Über diesen ersten gesicherten Übertragungskanal liest dann das ID-Provider-Computersystem in dem Schritt 16 die noch fehlenden Attribute, die in dem Schritt 13 von dem Attribut-Provider-Computersystem geschrieben worden sind und sendet optional in dem Schritt 17 ein Reset-Kommando, um hiermit den Vorgang des Lesens von Attributen aus dem ID-Token abzuschließen. In dem Schritt 18 kann dann das Dienst-Computersystem 150 mittels der zuvor aus dem ID-Token 106 gelesenen Attribute den gewünschten Dienst erbringen.

Nach Ausführungsformen der Erfindung können zusammen mit der dritten Attributspezifikation 178 Attribute, die in dem ID-Token 106 gespeichert sind, über das erste Attribut-Provider-Computersystem 172 an das zweite Attribut-Provider-Computersystem 173 gesendet werden, welche das zweite Attribut-Provider-Computersystem 173 zum Beispiel zur Durchführung der Abfrage von dessen Datenbank 175 verwenden kann, um die Attribute gemäß der dritten Attributspezifikation 178 abzufragen.

Ausführungsformen der Erfindung sind besonders vorteilhaft, da Attribute eines Nutzers auf besonders bequeme, sichere und flexible Art und Weise zur Verfügung gestellt werden, selbst dann, wenn diese Attribute nicht vollständig in dem ID-Token des Nutzers gespeichert sind und auch selbst dann, wenn die fehlenden Attribute nicht sämtlich von einem einzigen Attribut-Provider-Computersystem geliefert werden können.

### Bezugszeichenliste

- 100: Nutzer-Computersystem
- 101: Lesegerät
- 102: Nutzer
- 103: Dienstanforderung
- 104: Schnittstelle
- 105: erste Attributspezifikation
- 106: ID-Token
- 107: Lesekommando
- 108: Schnittstelle
- 109: Antwort
- 110: Prozessor
- 111: zweite Attributspezifikation
- 112: Programminstruktionen
- 113: flüchtiger Speicher
- 114: Netzwerk-Schnittstelle
- 116: Netzwerk
- 118: elektronischer Speicher
- 120: geschützter Speicherbereich
- 12: geschützter Speicherbereich
- 122: geschützter Speicherbereich
- 124: geschützter Speicherbereich
- 126: Speicherbereich
- 128: Prozessor
- 130: Programminstruktionen
- 131: Programminstruktionen
- 132: Programminstruktionen
- 134: Programminstruktionen
- 135: Programminstruktionen
- 136: ID-Provider-Computersystem
- 138: Netzwerk-Schnittstelle
- 140: Speicher
- 142: privater Schlüssel
- 144: Zertifikat
- 145: Prozessor
- 146: Programm instruktionen
- 148: Programm instruktionen
- 149: Programminstruktionen
- 150: Dienst-Computersystem
- 152: Netzwerk-Schnittstelle
- 154: Prozessor
- 156: Programminstruktionen
- 172: Attribut-Provider-Computersystem
- 173: Attribut-Provider-Computersystem
- 174: Attribut-Provider-Computersystem
- 175: Datenbank
- 176: Antwort durch erste Menge
- 177: Lesekommando
- 178: dritte Attributspezifikation
- 179: Antwort durch zweite Menge
- 180: Nachricht
- 181: Display
- 182: Bedienelement
- 183: Speicher

## Patentansprüche

1. Verfahren zum Lesen von Attributen aus einem ID-Token (106), der einem Nutzer (102) zugeordnet ist, wobei der ID-Token einen nichtflüchtigen elektronischen Speicher (118) mit einem geschützten Speicherbereich (124) aufweist, in dem Attribute gespeichert sind, wobei ein Zugriff auf den geschützten Speicherbereich nur über einen Prozessor (128) des ID-Tokens möglich ist, und wobei der ID-Token eine Kommunikationsschnittstelle (108) zur Kommunikation mit einem Lesegerät (101) eines Nutzer-Computersystems (100) aufweist, mit folgenden Schritten:
- Senden einer Dienstanforderung (103) des Nutzers von dem Nutzer-Computersystem über ein Netzwerk an einen Dienst-Computersystem, welches mit einem ID-Provider-Computersystem gekoppelt ist,
- Senden einer ersten Attributspezifikation (105) von dem Dienst-Computersystem an das ID-Provider-Computersystem über das Netzwerk, wobei die erste Attributspezifikation diejenigen Attribute spezifiziert, die das Dienst-Computersystem zur Erbringung des mit der Dienstanforderung angeforderten Dienstes benötigt,
- Aufbau eines lokalen gesicherten Übertragungskanals (SM [PACE]) zwischen dem ID-Token und dem Nutzer-Computersystem zur Authentifizierung des Nutzers gegenüber dem ID-Token,
- Authentifizierung des ID-Provider-Computersystems gegenüber dem ID-Token,
- Authentifizierung des ID-Tokens gegenüber dem ID-Provider-Computersystem,
- Aufbau eines ersten gesicherten Übertragungskanals (SM[CA]#1) mit Ende-zu-Ende-Verschlüsselung zwischen dem ID-Token und dem ID-Provider-Computersystem über das Netzwerk, wobei der lokale gesicherte Übertragungskanal bestehen bleibt,
- Durchführung eines ersten Lesezugriffs (107) des ID-Provider-Computersystems auf den ID-Token Lesen einer im ID-Token gespeicherten erstenTeilmenge der Attribute gemäß der ersten Attributspezifikation aus dem ID-Token,
- Übertragung der in dem Speicherbereich des ID-Tokens gespeicherten ersten Teilmenge der in der ersten Attributspezifikation spezifizierten Attribute (109) von dem ID-Token an das ID-Provider-Computersystem über den ersten gesicherten Übertragungskanal,
- Erzeugung einer zweiten Attributspezifikation (111) einer zweiten Teilmenge der Attribute der ersten Attributspezifikation von dem ID-Provider-Computersystem, die diejenige Attribute spezifiziert, welche in der ersten Teilmenge nicht beinhaltet sind und Übertragung der zweiten Attributspezifikation von dem ID-Provider-Computersystem an den ID-Token über den ersten gesicherten Übertragungskanal,
- Speicherung der zweiten Attributspezifikation in dem ID-Token,
- Übertragung eines ersten Umschaltkommandos (SC[PACE]) von dem ID-Provider-Computersystem an den ID-Token über den ersten gesicherten Übertragungskanal zur Umschaltung von dem ersten gesicherten Übertragungskanal auf den lokalen gesicherten Übertragungskanal,
- Authentifizierung eines ersten Attribut-Provider-Computersystems (172) gegenüber dem ID-Token,
- Authentifizierung des ID-Tokens gegenüber dem ersten Attribute-Provider-Computersystem,
- Aufbau eines zweiten gesicherten Übertragungskanals (SM[CA]#2) mit Ende-zu-Ende-Verschlüsselung zwischen dem ersten Attribut-Provider-Computersystem und dem ID-Token, wobei der erste gesicherte Übertragungskanal bestehen bleibt,
- Übertragung der zweiten Attributspezifikation von dem ID-Token über den zweiten gesicherten Übertragungskanal an das erste Attribut-Provider-Computersystem,
- Ermittlung einer ersten Menge verfügbarer Attribute gemäß der zweiten Attributspezifikation durch das erste Attribut-Provider-Computersystem, welche für das erste Attribut-Provider-Computersystem verfügbar sind,
- Erzeugung einer dritten Attributspezifikation (178) einer dritten Teilmenge der zweiten Attributspezifikation, die diejenigen Attribute der zweiten Teilmenge spezifiziert, die in der ersten Menge verfügbarer Attribute nicht beinhaltet sind und die das erste Attribut-Provider-Computersystem nicht ermitteln kann, durch das erste Attribut-Provider-Computersystem,
- Übertragung eines zweiten Umschaltkommandos (SC[PACE]) von dem ersten Attribut-Provider-Computersystem an den ID-Token über den zweiten gesicherten Übertragungskanal zur Umschaltung von dem zweiten gesicherten Übertragungskanal auf den lokalen gesicherten Übertragungskanal,
- Übertragung einer Signaturanfrage von dem ersten Attribut-Provider-Computersystem an das Nutzer-Computersystem zur Erzeugung einer digitalen Signatur der dritten Attributspezifikation durch den ID-Token
- Weiterleitung der Signaturanfrage von dem Nutzer-Computersystem an den ID-Token über den lokalen gesicherten Übertragungskanal,
- Erzeugung der digitalen Signatur der dritten Attributspezifikation durch den ID-Token,
- Übertragung eines dritten Umschaltkommandos (SC[CA]#2) von dem Nutzer-Computersystem an den ID-Token über den lokalen gesicherten Übertragungskanal zur Umschaltung von dem lokalen gesicherten Übertragungskanal auf den zweiten gesicherten Übertragungskanal,
- Übertragung der signierten dritten Attributspezifikation von dem ID-Token an das erste Attribut-Provider-Computersystem über den zweiten gesicherten Übertragungskanal,
- Weiterleitung der signierten dritten Attributspezifikation von dem ersten Attribut-Provider-Computersystem an ein zweites Attribut-Provider-Computersystem,
- Ermittlung einer zweiten Menge verfügbarer Attribute gemäß der dritten Attributspezifikation nach Prüfung der Validität der digitalen Signatur der dritten Attributspezifikation durch das zweite Attribut-Provider-Computersystem, welche für das zweite Attribut-Provider-Computersystem verfügbar sind, Übertragung der zweiten Menge verfügbarer Attribute von dem zweiten Attribut-Provider-Computersystem an das erste Attribut-Provider-Computersystem,
- Durchführung eines Schreibzugriffs (176) des ersten Attribut-Provider-Computersystems über den zweiten gesicherten Übertragungskanal zum Speichern von Attributen der ersten und zweiten Mengen in dem ID-Token,
- Übertragung eines vierten Umschaltkommandos (SC[CA]#1) von dem erste Attribut-Provider-Computersystem an den ID-Token über den zweiten gesicherten Übertragungskanal zur Umschaltung auf den ersten gesicherten Übertragungskanal,
- Durchführung eines zweiten Lesezugriffs (177) des ID-Provider-Computersystems über den ersten gesicherten Übertragungskanal zum Lesen der von dem ersten Attribut-Provider-Computersystem gemäß der zweiten Attributspezifikation in dem ID-Token gespeicherten Attribute,
- Ausgabe der aufgrund der Lesezugriffe von dem ID-Provider-Computersystem aus dem ID-Token ausgelesenen Attribute an das Dienst-Computersystem zur Erbringung des geforderten Dienstes.

2. Verfahren nach Anspruch 1, wobei die Kommunikationsschnittstelle des ID-Token zur drahtlosen Kommunikation und zur drahtlosen Einkopplung von Energie in den ID-Token durch das Lesegerät ausgebildet ist, um den ID-Token mit der für seinen Betrieb erforderlichen elektrischen Energie zu versorgen, wobei der ID-Token einen flüchtigen elektronischen Speicher (113) aufweist, in dem die zweite Attributspezifikation gespeichert wird, sodass die zweite Attributspezifikation aus dem flüchtigen elektronischen Speicher gelöscht wird, wenn der ID-Token aus der Reichweite des Lesegeräts entfernt wird, und wobei die aufgrund des Schreibzugriffs des ersten Attribut-Provider-Computersystems in dem ID-Token gespeicherten Attribute in dem nichtflüchtigen elektronischen Speicher (118) gespeichert werden, sodass auf diese durch einen nachfolgenden weiteren ersten Lesezugriff aufgrund einer weiteren Dienstanforderung zugegriffen werden kann oder alternativ Speicherung der zweiten Attributspezifikation in dem nicht-flüchtigen Speicher.

3. Verfahren nach Anspruch 1 oder 2, wobei der Nutzer zur Eingabe einer Signatur-PIN für die Freischaltung einer Signaturfunktion des ID-Tokens für die Erzeugung der digitalen Signatur der dritten Attributspezifikation durch das Lesegerät oder das Nutzer-Computersystem aufgefordert wird.

4. Verfahren nach Anspruch 1, 2 oder 3, wobei aufgrund des Schreibzugriffs (176) die zweite Attributspezifikation in dem ID-Token gelöscht wird.

5. Verfahren nach einem der vorhergehenden Ansprüche, wobei eine Session zwischen dem Nutzer-Computersystem und dem ersten Attribut-Provider-Computersystem aufgebaut wird, über die das erste Attribut-Provider-Computersystem die Signaturanfrage an das Nutzer-Computersystem überträgt, wobei das Nutzer-Computersystem die Signaturanfrage an den ID-Token über den lokalen gesicherten Übertragungskanal weiterleitet.

6. Verfahren nach Anspruch 5, wobei das ersten Attribut-Provider-Computersystem über die Session ein Bestätigungssignal empfängt, welches das Einverständnis des Nutzers mit der Weiterleitung der signierten dritten Attributspezifikation an das zweite Attribut-Provider-Computersystem signalisiert.

7. Verfahren nach einem der vorhergehenden Ansprüche, wobei die Authentifizierung des ID-Provider-Computersystems gegenüber dem ID-Token mithilfe eines Berechtigungszertifikats (144) des ID-Provider-Computersystems erfolgt, in dem Leserechte des ID-Provider-Computersystems zum Lesen von Attributen aus dem ID-Token spezifiziert sind, wobei der ID-Token für die Lesezugriffe des ID-Provider-Computersystems eine Prüfung der Leseberechtigung des ID-Provider-Computersystems mithilfe des Berechtigungszertifikats durchführt.

8. Verfahren nach einem der vorhergehenden Ansprüche, wobei die Authentifizierung des Attribut-Provider-Computersystems mithilfe eines Berechtigungszertifikats des Attribut-Provider-Computersystems erfolgt, in dem Rechte des Attribut-Provider-Computersystems zum Lesen einer Attributspezifikation aus dem ID-Token und zum Schreiben von Attributen in den ID-Token spezifiziert sind, wobei der ID-Token das Recht zum Lesen des Attribut-Provider-Computersystems vor der Übertragung einer Attributspezifikation an das Attribut-Provider-Computersystem prüft und wobei der ID-Token das Recht zum Schreiben von Attributen in den ID-Token vor dem Schreiben von Attributen durch das Attribut-Provider-Computersystem prüft.

9. Verfahren nach einem der vorhergehenden Ansprüche, wobei vor der Speicherung von Attributen in dem ID-Token aufgrund eines Schreibzugriffs die zu schreibenden Attribute auf einem Display (181) des ID-Tokens, des Lesegeräts oder des Nutzer-Computersystems angezeigt werden, und die zu schreibenden Attribute vorzugsweise erst nach Eingabe einer Bestätigung durch den Nutzer durch Betätigung eines Bedienelements (182) des ID-Tokens, des Lesegeräts bzw. des Nutzer-Computersystems in den nichtflüchtigen elektronischen Speicher geschrieben werden.

10. Verfahren nach einem der vorhergehenden Schritte, wobei es sich bei dem ID-Token um ein Wert- oder Sicherheitsdokument handelt, insbesondere ein Ausweisdokument, das heißt ein ID-Dokument, insbesondere einen elektronischen Personalausweis, Reisepass, Führerschein,
Firmenausweis oder ein Zahlungsmittel, wie zum Beispiel eine Banknote, eine Kreditkarte oder einen sonstigen Berechtigungsnachweis, wie zum Beispiel eine Eintrittskarte, einen Frachtbrief oder ein Visum, insbesondere eine Chipkarte, insbesondere mit RFID- und/oder NFC-Schnittstelle.

11. System mit einem Nutzer-Computersystem (100) bedient von einem Nutzer (102), einem Dienst-Computersystem (150), einem ID-Token (106), einem ID-Provider Computersystem (136), einem ersten Attribut-Provider-Computersystem (172), einem zweiten Attribut-Provider-Computersystem (173), wobei das System konfiguriert ist, ein Verfahren zum Lesen von Attributen aus dem Token (106) gemäß einem der Ansprüche 1-10 durchzuführen.

12. System nach Anspruch 11, wobei die Kommunikationsschnittstelle des ID-Token zur drahtlosen Kommunikation und zur drahtlosen Einkopplung von Energie in den ID-Token durch das Lesegerät ausgebildet ist, um den ID-Token mit der für seinen Betrieb erforderlichen elektrischen Energie zu versorgen, wobei der ID-Token einen flüchtigen elektronischen Speicher aufweist, und der ID-Token so konfiguriert ist, dass die zweite Attributspezifikation in dem flüchtigen elektronischen Speicher gespeichert wird, sodass die zweite Attributspezifikation aus dem flüchtigen elektronischen Speicher gelöscht wird, wenn der ID-Token aus der Reichweite des Lesegeräts entfernt wird, und wobei die aufgrund des Schreibzugriffs des ersten Attribut-Provider-Computersystems in dem ID-Token gespeicherten Attribute in dem nicht-flüchtigen elektronischen Speicher (118) gespeichert werden, sodass auf diese durch einen nachfolgenden weiteren ersten Lesezugriff aufgrund einer weiteren Dienstanforderung zugegriffen werden kann.

13. System nach Anspruch 11 oder 12, wobei die Attribut-Provider-Computersysteme ein Berechtigungszertifikat zur Authentifizierung gegenüber dem ID-Token beinhalten, wobei in dem Berechtigungszertifikat Rechte der Attribut-Provider-Computersysteme zum Lesen der Attributspezifikation aus dem ID-Token und zum Schreiben von Attributen in den ID-Token spezifiziert sind.

## Claims

1. A method for reading attributes from an ID token (106) which is assigned to a user (102), wherein the ID token has a non-volatile electronic memory (118) with a protected memory area (124) in which attributes are stored, with access to the protected memory area being possible only via a processor (128) of the ID token, and wherein the ID token has a communication interface (108) for communication with a reader (101) of a user computer system (100), said method comprising the following steps:
- sending a service request (103) on the part of the user from the user computer system via a network to a service computer system which is coupled to an ID provider computer system;
- sending a first attribute specification (105) from the service computer system to the ID provider computer system via the network, the first attribute specification specifying those attributes that the service computer system requires in order to provide the service requested by means of the service request;
- establishing a local secured transmission channel (SM[PACE]) between the ID token and the user computer system for authentication of the user to the ID token;
- authenticating the ID provider computer system to the ID token;
- authenticating the ID token to the ID provider computer system;
- establishing a first secured transmission channel (SM[CA]#1) with end-to-end encryption between the ID token and the ID provider computer system via the network, the local secured transmission channel still remaining;
- performing a first write access (107) for the ID provider computer system to the ID token in order to read, from the ID token, a first subset of the attributes stored in the ID token in accordance with the first attribute specification;
- transmitting the first subset of the attributes (109) specified in the first attribute specification and stored in the memory area of the ID token from the ID token to the ID provider computer system via the first secured transmission channel;
- producing a second attribute specification (111) of a second subset of the attributes of the first attribute specification from the ID provider computer system, specifying those attributes that are not contained in the first subset, and transmitting the second attribute specification from the ID provider computer system to the ID token via the first secured transmission channel;
- storing the second attribute specification in the ID token;
- transmitting a first switch command (SC[PACE]) from the ID provider computer system to the ID token via the first secured transmission channel to switch from the first secured transmission channel to the local secured transmission channel;
- authenticating a first attribute provider computer system (172) to the ID token;
- authenticating the ID token to the first attribute provider computer system;
- establishing a second secured transmission channel (SM[CA]#2) with end-to-end encryption between the first attribute provider computer system and the ID token, the first secured transmission channel being maintained;
- transmitting the second attribute specification from the ID token to the first attribute provider computer system via the second secured transmission channel;
- determining, by the first attribute provider computer system, a first set of available attributes in accordance with the second attribute specification, which first set of available attributes are available for the first attribute provider computer system;
- producing, by the first attribute provider computer system, a third attribute specification (178) a third attribute specification (178) of a third subset of the second attribute specification, specifying those attributes of the second subset that are not contained in the first set of available attributes and that the first attribute provider computer system is unable to determine;
- transmitting a second switch command (SC[PACE]) from the first attribute provider computer system to the ID token via the second secured transmission channel to switch from the second secured transmission channel to the local secured transmission channel;
- transmitting a signature request from the first attribute provider computer system to the user computer system for generation of a digital signature of the third attribute specification by the ID token;
- forwarding the signature request from the user computer system to the ID token via the local secured transmission channel;
- generating the digital signature of the third attribute specification by the ID token;
- transmitting a third switch command (SC[CA]#2) from the user computer system to the ID token via the local secured transmission channel to switch from the local secured transmission channel to the second secured transmission channel;
- transmitting the signed third attribute specification from the ID token to the first attribute provider computer system via the second secured transmission channel;
- forwarding the signed third attribute specification from the first attribute provider computer system to a second attribute provider computer system;
- determining a second set of available attributes in accordance with the third attribute specification after verification of the validity of the digital signature of the third attribute specification by the second attribute provider computer system, which second set of available attributes are available for the second attribute provider computer system, and transmitting the second set of available attributes from the second attribute provider computer system to the first attribute provider computer system,
- performing a write access (176) for the first attribute provider computer system via the second secured transmission channel in order to store attributes of the first and second sets in the ID token;
- transmitting a fourth switch command (SC[CA]#1) from the first attribute provider computer system to the ID token via the second secured transmission channel to switch to the first secured transmission channel;
- performing a second read access (177) of the ID provider computer system via the first secured transmission channel to read the attributes stored in the ID token by the first attribute provider computer system in accordance with the second attribute specification;
- outputting, to the service computer system, the attributes read out from the ID token on account of the read accesses by the ID provider computer system, so as to provide the requested service.

2. The method according to claim 1, wherein the communication interface of the ID token is designed for wireless communication and for wireless coupling of energy into the ID token through the reader in order to supply the ID token with the electrical energy necessary for its operation, the ID token having a volatile electronic memory (113) in which the second attribute specification is stored so that the second attribute specification is deleted from the volatile electronic memory if the ID token is moved out of range of the reader, and the attributes stored in the ID token on account of the write access of the first attribute provider computer system being stored in the non-volatile electronic memory (118) so that they may be accessed by a subsequent further first read access on account of a further service request or, alternatively, storing of the second attribute specification in the non-volatile memory.

3. The method according to claim 1 or 2, wherein the user is requested to input a signature PIN in order to release a signature function of the ID token for the generation of the digital signature of the third attribute specification by the reader or the user computer system.

4. The method according to claim 1, 2 or 3, wherein, on account of the write access (176), the second attribute specification in the ID token is deleted.

5. The method according to any one of the preceding claims, wherein a session is established between the user computer system and the first attribute provider computer system, via which session the first attribute provider computer system transmits the signature request to the user computer system, and the user computer system forwards the signature request to the ID token via the local secured transmission channel.

6. The method according to claim 5, wherein the first attribute provider computer system receives a confirmation signal via the session, which confirmation signal signals the consent of the user by way of the forwarding of the signed third attribute specification to the second attribute provider computer system.

7. The method according to any one of the preceding claims, wherein the ID provider computer system is authenticated to the ID token with the aid of an authorisation certificate (144) of the ID provider computer system, which authorisation certificate specifies read permissions of the ID provider computer system for reading attributes from the ID token, and the ID token, for the read accesses of the ID provider computer system, verifies the read authorisation of the ID provider computer system with the aid of the authorisation certificate.

8. The method according to any one of the preceding claims, wherein the attribute provider computer system is authenticated with the aid of an authorisation certificate of the attribute provider computer system, which authorisation certificate specifies permissions of the attribute provider computer system for reading an attribute specification from the ID token and for writing attributes into the ID token, with the ID token verifying the read permission of the attribute provider computer system prior to the transmission of an attribute specification to the attribute provider computer system, the ID token also verifying the permission to write attributes into the ID token prior to the writing of attributes by the attribute provider computer system.

9. The method according to any one of the preceding claims, wherein, prior to the storing of attributes in the ID token on account of write access, the attributes to be written are shown on a display (181) of the ID token, the reader or the user computer system, and the attributes to be written are written into the non-volatile electronic memory preferably only once confirmation has been input by the user by actuation of an operating element (182) of the ID token, the reader or the user computer system.

10. The method according to any one of the preceding steps, wherein the ID token is a value or security document, in particular an identification document, that is to say an ID document, in particular an electronic personal ID card, passport, driver's licence, company ID or a payment means, for example a banknote, a credit card, or another proof of authorisation, for example an entry ticket, a consignment note or a visa, in particular a chip card, in particular with RFID and/or NFC interface.

11. A system comprising a user computer system (100) operated by a user (102), a service computer system (150), an ID token (106), an ID provider computer system (136), a first attribute provider computer system (172), and a second attribute provider computer system (173), wherein the system is configured to carry out a method for reading attributes from the token (106) in accordance with any one of claims 1-10.

12. The system according to claim 11, wherein the communication interface of the ID token is designed for wireless communication and for wireless coupling of energy into the ID token through the reader in order to supply the ID token with the electrical energy necessary for its operation, the ID token having a volatile electronic memory, and the ID token being configured such that the second attribute specification is stored in the volatile electronic memory, so that the second attribute specification is deleted from the volatile electronic memory if the ID token is moved out of range of the reader, and the attributes stored in the ID token on account of the write access of the first attribute provider computer system being stored in the non-volatile electronic memory (118) so that they may be accessed by a subsequent further first read access on account of a further service request.

13. The system according to claim 11 or 12, wherein the attribute provider computer systems contain an authorisation certificate for authentication to the ID token, with said authorisation certificate specifying permissions of the attribute provider computer systems to read the attribute specification from the ID token and to write attributes into the ID token.

## Revendications

1. Procédé de lecture d'attributs à partir d'un jeton d'ID (106), qui est associé à un utilisateur (102), dans lequel le jeton d'ID présente une mémoire (118) électronique non volatile avec une zone de mémoire (124) sécurisée dans laquelle sont stockés les attributs, où un accès à la zone de mémoire sécurisée n'est possible que par le biais d'un processeur (128) du jeton d'ID et où le jeton d'ID présente une interface de communication (108) pour la communication avec un lecteur (101) d'un système informatique d'utilisateur (100), avec les étapes suivantes :
- l'envoi d'une demande de service (103) de l'utilisateur à partir du système informatique d'utilisateur par le biais d'un réseau à un système informatique de service, lequel est couplé avec un système informatique de fournisseur de services,
- l'envoi d'une première spécification d'attributs (105) du système informatique de service au système informatique de fournisseur d'ID par le biais du réseau, où la première spécification d'attributs spécifie les attributs en question dont a besoin le système informatique de service pour apporter la prestation du service demandé dans la demande de service,
- l'établissement d'un canal de transmission (SM[PACE]) local sécurisé entre le jeton d'ID et le système informatique d'utilisateur pour l'authentification de l'utilisateur vis-à-vis du jeton d'ID,
l'authentification du système informatique de fournisseur d'ID vis-à-vis du jeton d'ID,
- l'authentification du jeton d'ID vis-à-vis du système informatique de fournisseur d'ID,
- l'établissement d'un premier canal de transmission (SM[CA] #1) sécurisé avec un chiffrement de bout en bout entre le jeton d'ID et le système informatique de fournisseur d'ID par le biais du réseau, où le canal de transmission local sécurisé reste en place,
- l'exécution d'un premier accès en lecture (107) du système informatique de fournisseur d'ID au niveau du jeton d'ID pour la lecture d'une première quantité partielle des attributs stockés dans le jeton d'ID conformément à la première spécification d'attributs à partir du jeton d'ID,
- la transmission de la première quantité partielle des attributs (109) spécifiés dans la première spécification d'attributs stockée dans la zone de mémoire du jeton d'ID à partir du jeton d'ID au système informatique de fournisseur d'ID par le biais du premier canal de transmission sécurisé,
- la création d'une deuxième spécification d'attributs (111) d'une deuxième quantité partielle des attributs de la première spécification d'attributs par le système informatique de fournisseur d'ID, qui spécifie les attributs en question, lesquels ne sont pas contenus dans la première quantité partielle et la transmission de la deuxième spécification d'attributs du système informatique de fournisseur d'ID au jeton d'ID par le biais du premier canal de transmission sécurisé,
- le stockage de la deuxième spécification d'attributs dans le jeton d'ID,
- la transmission d'une première commande de commutation ((SC[PACE]) du système informatique de fournisseur d'ID au jeton d'ID par le biais du premier canal de transmission sécurisé pour assurer la commutation du premier canal de transmission sécurisé vers le canal de transmission sécurisé local,
- l'authentification d'un premier système informatique de fournisseur d'attributs (172) vis-à-vis du jeton d'ID,
- l'authentification du jeton d'ID vis-à-vis du premier système informatique de fournisseur d'attributs,
- l'établissement d'un deuxième canal de transmission sécurisé (SM[CA]#2) avec un chiffrement de bout en bout entre le premier système informatique de fournisseur d'attributs et le jeton d'ID, où le premier canal de transmission sécurisé reste en place,
- la transmission de la deuxième spécification d'attributs du jeton d'ID au premier système informatique de fournisseur d'attributs par le biais du deuxième canal de transmission sécurisé,
- la détermination d'une première quantité d'attributs disponibles en conformité avec la deuxième spécification d'attributs par le premier système informatique de fournisseur d'attributs, lesquels sont disponibles pour le premier système informatique de fournisseur d'attributs,
- la création d'une troisième spécification d'attributs (178) d'une troisième quantité partielle de la deuxième spécification d'attributs qui spécifie les attributs en question de la deuxième quantité partielle qui ne sont pas contenus dans les attributs disponibles dans la première quantité et que le premier système informatique de fournisseur d'attributs ne peut pas déterminer, par le premier système informatique de fournisseur d'attributs,
- la transmission d'une deuxième commande de commutation (SC[PACE]) du premier système informatique de fournisseur d'attributs au jeton d'ID par le biais du deuxième canal de transmission sécurisé pour la commutation du deuxième canal de transmission sécurisé sur le canal de transmission sécurisé local,
- la transmission d'une demande de signature du premier système informatique de fournisseur d'attributs au système informatique d'utilisateur pour la création d'une signature numérique de la troisième spécification d'attributs par le jeton d'ID,
- la poursuite de la transmission de la demande de signature du système informatique d'utilisateur au jeton d'ID par le biais du canal de transmission sécurisé local,
- la création de la signature numérique de la troisième spécification d'attributs par le jeton d'ID,
- la transmission d'une troisième commande de commutation (SC[CA]#2) du système informatique d'utilisateur au jeton d'ID par le biais du canal de transmission sécurisé local pour la commutation du canal de transmission sécurisé local sur le deuxième canal de transmission sécurisé,
- la transmission de la troisième spécification d'attributs signée du jeton d'ID au premier système informatique de fournisseur d'attributs par le biais du deuxième canal de transmission sécurisé,
- la poursuite de la transmission de la troisième spécification d'attributs signée du premier système informatique de fournisseur d'attributs à un deuxième système informatique de fournisseur d'attributs,
- la détermination d'une deuxième quantité d'attributs disponibles en conformité avec la troisième spécification d'attributs après une vérification de la validité de la signature numérique de la troisième spécification d'attributs par le deuxième système informatique de fournisseur d'attributs, lesquels sont disponibles pour le deuxième système informatique de fournisseur d'attributs, la transmission de la deuxième quantité d'attributs disponibles du deuxième système informatique de fournisseur d'attributs au premier système informatique de fournisseur d'attributs,
- l'exécution d'un accès en écriture (176) du premier système informatique de fournisseur d'attributs par le biais du deuxième canal de transmission sécurisé pour le stockage d'attributs des première et deuxième quantités dans le jeton d'ID,
- la transmission d'une quatrième commande de commutation (SC[CA]#1) par le premier système de fournisseur d'attributs au jeton d'ID par le biais du deuxième canal de transmission sécurisé pour la commutation sur le premier canal de transmission sécurisé,
- l'exécution d'un deuxième accès en lecture (177) du système informatique de fournisseur d'ID par le biais du premier canal de transmission sécurisé pour la lecture des attributs stockés dans le jeton d'ID en conformité avec la deuxième spécification d'attributs,
- l'émission des attributs lus à partir du jeton d'ID en raison des accès en lecture du système informatique de fournisseur d'ID vers le système informatique de service pour le règlement du service demandé.

2. Procédé selon la revendication 1, dans lequel l'interface de communication du jeton d'ID est conçue pour la communication sans fil et pour le couplage sans fil d'énergie dans le jeton d'ID par le lecteur, afin d'alimenter le jeton d'ID avec l'énergie électrique nécessaire pour son fonctionnement, où le jeton d'ID présente une mémoire (113) électronique volatile dans laquelle la deuxième spécification d'attributs est stockée, de sorte que la deuxième spécification d'attributs est effacée de la mémoire électronique volatile lorsque le jeton d'ID est éloigné hors de la portée du lecteur, et où les attributs stockés dans le jeton d'ID en raison de l'accès en écriture du premier système informatique de fournisseur d'attributs sont stockés dans la mémoire (118) électronique non volatile, de sorte qu'on puisse avoir accès à ceux-ci par un nouveau premier accès en lecture en raison d'une nouvelle demande de service ou pour un stockage alternatif de la deuxième spécification d'attributs dans la mémoire non volatile.

3. Procédé selon la revendication 1 ou la revendication 2, dans lequel l'utilisateur est incité par le lecteur ou le système informatique d'utilisateur à entrer un code PIN de signature pour la libération d'une fonction de signature du jeton d'ID permettant la création de la signature numérique de la troisième spécification d'attributs.

4. Procédé selon la revendication 1, la revendication 2 ou la revendication 3, dans lequel, en raison de l'accès en écriture (176), la deuxième spécification d'attributs est effacée dans le jeton d'ID.

5. Procédé selon l'une des revendications précédentes, dans lequel une session entre le système informatique d'utilisateur et le premier système informatique de fournisseur d'attributs est établie, par le biais de laquelle le premier système informatique de fournisseur d'attributs transmet la demande de signature au système informatique d'utilisateur, où le système informatique d'utilisateur poursuit la transmission de la demande de signature au jeton d'ID par le biais du canal de transmission sécurisé local.

6. Procédé selon la revendication 5, dans lequel le premier système informatique de fournisseur d'attributs reçoit par le biais de la session un signal de confirmation, lequel signale l'accord de l'utilisateur pour la poursuite de la transmission de la troisième spécification d'attributs signée au deuxième système informatique de fournisseur d'attributs.

7. Procédé selon l'une des revendications précédentes, dans lequel l'authentification du système informatique de fournisseur d'ID vis-à-vis du jeton d'ID a lieu à l'aide d'un certificat d'autorisation (144) du système informatique de fournisseur d'ID dans lequel sont spécifiés des droits de lecture du système informatique de fournisseur d'ID pour la lecture d'attributs à partir du jeton d'ID, où le jeton d'ID exécute une vérification de l'autorisation de lecture du système informatique de fournisseur d'ID à l'aide du certificat d'autorisation pour les accès en lecture du système informatique de fournisseur d'ID.

8. Procédé selon l'une des revendications précédentes, dans lequel l'authentification du système informatique de fournisseur d'attributs a lieu à l'aide d'un certificat d'autorisation du système informatique de fournisseur d'attributs dans lequel sont spécifiés des droits du système informatique de fournisseur d'attributs pour la lecture d'une spécification d'attributs à partir du jeton d'ID et pour l'écriture d'attributs dans le jeton d'ID, où le jeton d'ID vérifie l'autorisation pour la lecture du système informatique de fournisseur d'attributs avant la transmission d'une spécification d'attributs au système informatique de fournisseur d'attributs et où le jeton d'ID vérifie l'autorisation pour l'écriture d'attributs dans le jeton d'ID avant l'écriture d'attributs par le système informatique de fournisseur d'attributs.

9. Procédé selon l'une des revendications précédentes, dans lequel, avant le stockage d'attributs dans le jeton d'ID en raison d'un accès en écriture, les attributs à écrire sont indiqués sur un affichage (181) du jeton d'ID, du lecteur ou du système informatique d'utilisateur, et les attributs à écrire ne sont écrits dans la mémoire électronique non volatile de préférence uniquement après la saisie d'une confirmation par l'utilisateur par l'actionnement d'un élément d'actionnement (182) du jeton d'ID, du lecteur, respectivement, du système informatique d'utilisateur.

10. Procédé selon l'une des étapes précédentes, dans lequel, dans le cas du jeton d'ID, il s'agit d'un document de valeur ou de sécurité, notamment d'un document d'identité, c'est-à-dire d'un document ID, notamment une carte d'identité électronique, un passeport, un permis de conduire, une carte d'entreprise ou un moyen de paiement, comme, par exemple, un billet de banque, une carte de crédit ou un autre document justificatif, comme, par exemple, une carte d'entrée, un connaissement ou un visa, notamment une carte à puce, en particulier, dotée d'une interface RFID et/ou NFC.

11. Système doté d'un système informatique d'utilisateur (100) utilisé par un utilisateur (102), d'un système informatique de service (150), d'un jeton d'ID (106), d'un système informatique de fournisseur d'ID (136), d'un premier système informatique de fournisseur d'attributs (172), d'un deuxième système informatique de fournisseur d'attributs (173), où le système est conçu pour exécuter un procédé de lecture d'attributs à partir du jeton d'ID (106) selon l'une des revendications 1 à 10.

12. Système selon la revendication 11, dans lequel l'interface de communication du jeton d'ID est conçue pour la communication sans fil et pour le couplage sans fil d'énergie dans le jeton d'ID par le lecteur, afin d'alimenter le jeton d'ID avec l'énergie électrique nécessaire pour son fonctionnement, où le jeton d'ID présente une mémoire électronique volatile, et le jeton d'ID est conçu de manière à ce que la deuxième spécification d'attributs est stockée dans la mémoire électronique volatile, de sorte que la deuxième spécification d'attributs est effacée de la mémoire électronique volatile lorsque le jeton d'ID est éloigné hors de la portée du lecteur, et où les attributs stockés dans le jeton d'ID en raison de l'accès en écriture du premier système informatique de fournisseur d'attributs sont stockés dans la mémoire (118) électronique non volatile, de sorte qu'on puisse avoir accès à ceux-ci par un nouveau premier accès en lecture ultérieur en raison d'une nouvelle demande de service.

13. Système selon la revendication 11 ou la revendication 12, dans lequel les systèmes informatiques de fournisseur d'attributs contiennent un certificat d'autorisation pour l'authentification vis-à-vis du jeton d'ID,
dans lequel des droits des systèmes informatiques de fournisseur d'attributs sont spécifiés dans le certificat d'autorisation pour la lecture de la spécification d'attributs à partir du jeton d'ID et pour l'écriture d'attributs dans le jeton d'ID.
